# EUROPEAN PATENT APPLICATION

(11) **EP 4 510 530 A1**
(43) Date of publication of application: **19.02.2025**
(21) Application number: 23795293.2
(22) Date of filing: 23.04.2023
(51) Int. Cl.: H04L 47/76

(54) **COMMUNICATION METHOD AND COMMUNICATION APPARATUS**

(30) Priority: 26.04.2022 CN 202210446105
(71) Applicant: Huawei Technologies Co., Ltd., Shenzhen, Guangdong 518129 (CN)
(72) Inventor: WANG, Jian, Shenzhen, Guangdong 518129 (CN); QIAO, Yunfei, Shenzhen, Guangdong 518129 (CN); LI, Rong, Shenzhen, Guangdong 518129 (CN)
(74) Representative: Goddar, Heinz J.
(86) International application number: PCT/CN2023/090126
(87) International publication number: WO 2023/207860

(57) **Abstract**

This application provides a communication method and a communication apparatus. The method includes: A first node receives first information from a second node, where the first information indicates at least one artificial intelligence AI task of the second node. The first node sends second information to the second node, where the second information is used to establish, with the second node, a connection for executing a first AI task, and the at least one AI task includes the first AI task. In this way, a resource can be shared between communication nodes, so that the communication nodes implement more functions by using an AI technology.

## Description

This application claims priority to Chinese Patent Application No. 202210446105.4, filed with the China National Intellectual Property Administration on April 26, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Artificial intelligence (artificial intelligence, AI) is a scientific and technological capability of simulating a human cognition capability via a machine. A core capability of the AI is to perform determining or prediction based on a given input. AI development aims to centrally process and extract information from a large amount of data to summarize intrinsic rules of study objects.

With the advent of the big data era, each device generates a large amount of data in various forms every day. The data is independently distributed in different locations. Some devices that have abundant data resources may not have a processing capability needed by AI technologies, and some devices that have the AI technology processing capability may have insufficient data resources. Consequently, application of the AI technology is limited.

### SUMMARY

Embodiments of this application provide a communication method and a communication apparatus. In this way, a resource can be shared between communication nodes, so that the communication nodes implement more functions by using an AI technology.

According to a first aspect, a communication method is provided. The method includes: A first node receives first information from a second node, where the first information indicates at least one artificial intelligence AI task of the second node. The first node sends second information to the second node, where the second information is used to establish, with the second node, a connection for executing a first AI task, and the at least one AI task includes the first AI task.

According to the foregoing solution, the second node may indicate an AI task of the second node by using sent information, so that another communication node learns of the AI task of the second node, to establish, with the second node based on a requirement, a connection for executing the AI task. In this way, a resource, for example, an AI processing capability resource and/or a data resource, can be shared between communication nodes, so that the communication nodes implement more functions by using an AI technology.

With reference to the first aspect, in some implementations of the first aspect, the at least one AI task includes a task of a first task type and/or a task of a second task type, the task of the first task type is an AI task provided by the second node for the first node, and the task of the second task type is an AI task that the second node needs the first node to assist in completing.

According to the foregoing solution, the second node may specifically indicate, by using sent information, an AI task that may be provided by the second node and that is of an execution service, so that another communication node that needs to obtain the service of executing the AI task can learn that the second node can provide, for the another communication node, the service of executing the AI task. The second node may specifically indicate, by using sent information, an AI task that the second node needs another node to assist in completing, so that a communication node that can assist in completing the AI task can learn that the second node needs to be assisted in completing the AI task. Therefore, the connection for executing the AI task can be established between the communication nodes as needed. In this way, the resource, for example, the AI processing capability resource and/or the data resource, can be shared between the communication nodes, so that the communication nodes implement the more functions by using the AI technology.

With reference to the first aspect, in some implementations of the first aspect, the first information further indicates at least one node type corresponding to the at least one AI task, and the at least one node type includes a first node type and/or a second node type, where the second node needs a node of the first node type to assist in completing an AI task corresponding to the first node type, and the second node supports providing, for a node of the second node type, a service of executing an AI task corresponding to the second node type.

According to the foregoing solution, the second node may indicate a node type corresponding to the AI task, so that a communication node of the corresponding node type can establish, with the second node, the connection for executing the AI task. In this way, the resource can be shared between the communication nodes.

With reference to the first aspect, in some implementations of the first aspect, before that the first node sends second information to the second node, the method further includes: The first node sends connection request information to the second node, where the connection request information is used to request to establish, with the second node, the connection for executing the AI task. The first node receives fourth information from the second node, where the fourth information is used to respond to the connection request information.

According to the foregoing solution, after receiving the first information, the first node may send the connection request information to the second node. For example, the connection request information includes a preamble. Correspondingly, the second node learns, based on the connection request information, that the first node needs to establish the connection for executing the AI task, and responds to the first node based on the fourth information, so that the first node and the second node reach a preliminary consensus on establishing the connection for executing the AI task, and then exchange, through subsequent steps, a requirement for establishing the connection, a capability of executing the AI task, and the like. In this way, both parties determine whether to establish the connection for executing the AI task.

With reference to the first aspect, in some implementations of the first aspect, the fourth information includes resource configuration information, the resource configuration information is used to configure a first resource, and that the first node sends second information to the second node includes: The first node sends the second information to the second node on the first resource, where the second information includes node description information, and the node description information includes one or more pieces of the following information about the first node: characteristic information of a dataset, model performance requirement information, or capability information. The dataset is used for model training and/or model inference of the first AI task.

According to the foregoing solution, the first node sends the description information to the second node, so that the second node determines, based on the node description information, whether a requirement of the first node can be satisfied specifically, to determine whether to establish, with the first node, the connection for executing the AI task. The connection for executing the AI task can be established as needed, and a waste of resources can be reduced.

With reference to the first aspect, in some implementations of the first aspect, the method further includes: The first node receives fourth information from the second node, where the fourth information is used to respond to a connection establishment request of the first node.

According to the foregoing solution, after receiving the first information from the second node, the first node indicates, by using the second information, to establish, with the second node, the connection for executing the first AI task. If the second node may respond to a connection establishment request of the first node based on the fourth information, the first node and the second node reach a preliminary consensus on establishing the connection for executing the first AI task, and then exchange, through subsequent steps, a requirement for establishing the connection, a capability of executing the AI task, and the like. In this way, both parties determine whether to establish the connection for executing the first AI task.

With reference to the first aspect, in some implementations of the first aspect, the fourth information includes resource configuration information, the resource configuration information indicates a first resource, and the method further includes: The first node sends node description information to the second node on the first resource, where the node description information includes one or more pieces of the following information about the first node: characteristic information of a dataset, model performance requirement information, or capability information, where the dataset is used for model training and/or model inference of the first AI task.

According to the foregoing solution, the second node may configure, for the first node based on the fourth information, a resource that carries the node description information, and the first node sends the node description information to the second node on the resource, so that the first node and the second node reach a consensus on the resource that carries the node description information. In this way, transmission of the node description information can be successfully performed.

With reference to the first aspect, in some implementations of the first aspect, the fourth information further includes information about the dataset corresponding to the first AI task, performance information of an intelligent model of the first AI task, and/or load information of the second node, where the information about the dataset indicates a characteristic of training data of the intelligent model and/or that the dataset is used to evaluate performance of the intelligent model of the first AI task.

According to the foregoing solution, the second node may provide, for the first node based on the fourth information, related information about executing the first AI task, so that the first node can determine, based on the fourth information, whether the second node can provide, for the first node, a service of executing the first AI task that satisfies a requirement, or can determine whether a requirement of the second node for assisting in completing the first AI task can be satisfied. In this way, the connection for executing the AI task can be established between the communication nodes as needed, and a waste of resources can be reduced.

With reference to the first aspect, in some implementations of the first aspect, the method further includes: The first node receives connection determining information or connection failure information from the second node, where the connection determining information is used to determine to establish, with the first node, the connection for executing the first AI task, and the connection failure information indicates that the connection for executing the first AI task fails to be established with the first node.

According to the foregoing solution, after receiving the second information from the first node, the second node determines, based on the description information, whether a requirement of the first node for the first AI task can be satisfied and/or whether the first node satisfies a requirement of the second node for the first AI task. If the requirement is satisfied, the second node may send the connection determining information to the first node, and determine to establish, with the first node, the connection for executing the first AI task, in other words, notify the first node that the connection is agreed to be established with the first node. The second node may start to provide, for the first node, a service of executing the first AI task, and/or the first node and the second node may start to jointly complete the first AI task. In this way, the resource is shared and the AI technology is used to implement the more functions.

With reference to the first aspect, in some implementations of the first aspect, the connection failure information further indicates a third node, and the third node is a node recommended by the second node to the first node for establishing a connection for executing the first AI task.

According to the foregoing solution, if the second node cannot satisfy a requirement of the first node for executing the AI task, the second node may recommend, to the first node, the third node that can satisfy the requirement, so that the first node can quickly find a node that can satisfy the requirement for executing the AI task.

With reference to the first aspect, in some implementations of the first aspect, the first information includes identification information of each of the at least one AI task, or identification information and task type information of each AI task.

According to a second aspect, a communication method is provided. For beneficial effects, refer to descriptions in the first aspect. Details are not described herein again. The method includes: A second node sends first information, where the first information indicates at least one artificial intelligence AI task of the second node. The second node receives second information from a first node, where the second information is used to establish, with the second node, a connection for executing a first AI task, and the at least one AI task includes the first AI task.

With reference to the second aspect, in some implementations of the second aspect, the at least one AI task includes a task of a first task type and/or a task of a second task type, the task of the first task type is an AI task provided by the second node for the first node, and the task of the second task type is an AI task that the second node needs the first node to assist in completing.

With reference to the second aspect, in some implementations of the second aspect, the first information further indicates at least one node type corresponding to the at least one AI task, and the at least one node type includes a first node type and/or a second node type, where the second node needs a node of the first node type to assist in completing an AI task corresponding to the first node type, and the second node supports providing, for a node of the second node type, a service of executing an AI task corresponding to the second node type.

With reference to the second aspect, in some implementations of the second aspect, before that the second node receives second information from a first node, the method further includes: The second node receives connection request information from the first node, where the connection request information is used to request to establish, with the second node, a connection for executing an AI task. The second node sends fourth information to the first node, where the fourth information is used to respond to the connection request information.

With reference to the second aspect, in some implementations of the second aspect, the fourth information includes resource configuration information, the resource configuration information is used to configure a first resource, and that the first node sends the second information to the second node includes: The first node sends the second information to the second node on the first resource, where the second information includes node description information, and the node description information includes one or more pieces of the following information about the first node: characteristic information of a dataset, model performance requirement information, or capability information. The dataset is used for model training and/or model inference of the first AI task.

With reference to the second aspect, in some implementations of the second aspect, the method further includes: The first node receives fourth information from the second node, where the fourth information is used to respond to a connection establishment request of the first node.

With reference to the second aspect, in some implementations of the second aspect, the fourth information includes resource configuration information, the resource configuration information indicates a first resource, and the method further includes: The second node receives node description information from the second node on the first resource, where the node description information includes one or more pieces of the following information about the first node: characteristic information of a dataset, model performance requirement information, or capability information, where the dataset is used for model training and/or model inference of the first AI task.

With reference to the second aspect, in some implementations of the second aspect, the fourth information further includes information about the dataset corresponding to the first AI task, performance information of an intelligent model of the first AI task, and/or load information of the second node, where the information about the dataset indicates a characteristic of training data of the intelligent model and/or that the dataset is used to evaluate performance of the intelligent model of the first AI task.

With reference to the second aspect, in some implementations of the second aspect, the method further includes: The second node sends connection determining information or connection failure information to the first node, where the connection determining information is used to determine to establish, with the first node, the connection for executing the first AI task, and the connection failure information indicates that the connection for executing the first AI task fails to be established with the first node.

With reference to the second aspect, in some implementations of the second aspect, the connection failure information further indicates a third node, and the third node is a node recommended by the second node to the first node for establishing a connection for executing the first AI task.

With reference to the second aspect, in some implementations of the second aspect, the first information includes identification information of each of the at least one AI task, or identification information and task type information of each AI task.

According to a third aspect, a communication method is provided. The method includes: A first node sends connection request information to a second node, where the connection request information is used to request to establish, with the second node, a connection for executing an AI task. The first node receives fourth information from the second node, where the fourth information is used to respond to the connection request information.

According to the foregoing solution, the first node that has a requirement for executing the AI task may select a communication node to send the connection request information, so that the second node learns that the first node has the requirement for executing the AI task, and determines, based on a capability of the second node, whether the requirement of the first node for executing the AI task can be satisfied, to determine whether to establish, with the first node, the connection for executing the AI task.

With reference to the third aspect, in some implementations of the third aspect, the fourth information includes resource configuration information, the resource configuration information indicates a first resource, and the method further includes: The first node sends second information to the second node on the first resource, where the second information includes node description information, and the node description information includes one or more pieces of the following information about the first node: characteristic information of a dataset, model performance requirement information, or capability information. The dataset is used for model training and/or model inference of a first AI task.

With reference to the third aspect, in some implementations of the third aspect, the connection request information is specifically used to request to establish, with the second node, a connection for executing the first AI task, or the second information indicates to request to establish, with the second node, a connection for executing the first AI task.

With reference to the third aspect, in some implementations of the third aspect, the connection request information is specifically used to request to establish, with the second node, the connection for executing the first AI task, the fourth information indicates a third node, and the third node is a node recommended by the second node to the first node for establishing a connection for executing the first AI task.

According to the foregoing solution, if the second node cannot establish, with the first node, the connection for executing the first AI task, the second node may recommend, to the first node based on the fourth information, the third node that can execute the first AI task, so that the first node can quickly find a node that can satisfy a requirement for executing the AI task.

With reference to the third aspect, in some implementations of the third aspect, the method further includes: The first node receives connection determining information or connection failure information from the second node, where the connection determining information is used to determine to establish, with the first node, the connection for executing the first AI task, and the connection failure information indicates that the connection for executing the first AI task fails to be established with the first node.

According to the foregoing solution, the first node may initiate, based on a requirement, a connection request for establishing, with the second node, a connection for executing an AI task needed by the first node. In response to the connection request of the first node, when a requirement for executing the AI task can be satisfied, the second node establishes, with the first node, the connection for executing the AI task. In this way, a resource, for example, an AI processing capability resource and/or a data resource, can be shared between communication nodes, so that the communication nodes implement more functions by using an AI technology. If the requirement of the first node for executing the AI task cannot be satisfied, the second node notifies, by using the connection failure information, the first node that the connection fails to be established.

With reference to the third aspect, in some implementations of the third aspect, the connection failure information further indicates the third node, and the third node is the node recommended by the second node to the first node for establishing the connection for executing the first AI task.

According to the foregoing solution, if the second node cannot satisfy the requirement of the first node for the first AI task, the second node may recommend, to the first node based on the connection failure information, the third node that can execute the first AI task, so that the first node can quickly find a node that can satisfy the requirement for executing the AI task.

According to a fourth aspect, a communication method is provided. For beneficial effects, refer to descriptions in the third aspect. Details are not described herein again. The method includes: A second node receives connection request information from a first node, where the second information is used to request to establish, with the second node, a connection for executing an AI task. The second node sends fourth information to the first node, where the fourth information is used to respond to the connection request information.

With reference to the fourth aspect, in some implementations of the fourth aspect, the fourth information includes resource configuration information, the resource configuration information indicates a first resource, and the method further includes: The second node receives second information from the first node on the first resource, where the second information includes node description information, and the node description information includes one or more pieces of the following information about the first node: characteristic information of a dataset, model performance requirement information, or capability information. The dataset is used for model training and/or model inference of a first AI task.

With reference to the fourth aspect, in some implementations of the fourth aspect, the connection request information is specifically used to request to establish, with the second node, a connection for executing the first AI task, or the second information indicates to request to establish, with the second node, a connection for executing the first AI task.

With reference to the fourth aspect, in some implementations of the fourth aspect, the method further includes: The second node sends connection determining information or connection failure information to the first node, where the connection determining information is used to determine to establish, with the first node, the connection for executing the first AI task, and the connection failure information indicates that the connection for executing the first AI task fails to be established with the first node.

With reference to the fourth aspect, in some implementations of the fourth aspect, the connection failure information further indicates a third node, and the third node is a node recommended by the second node to the first node for establishing a connection for executing the first AI task.

With reference to the fourth aspect, in some implementations of the fourth aspect, the connection request information is specifically used to request to establish, with the second node, the connection for executing the first AI task, the fourth information indicates the third node, and the third node is the node recommended by the second node to the first node for establishing the connection for executing the first AI task.

According to a fifth aspect, a communication apparatus is provided. In a design, the apparatus may include modules for performing the method/operations/steps/actions described in the first aspect. The modules may be hardware circuits, may be software, or may be implemented by using a combination of a hardware circuit and software. In a design, the apparatus includes: a transceiver unit, configured to receive first information from a second node, where the first information indicates at least one artificial intelligence AI task of the second node; and a processing unit, configured to determine the at least one artificial intelligence AI task of the second node. The transceiver unit is further configured to send second information to the second node, where the second information is used to establish, with the second node, a connection for executing a first AI task, and the at least one AI task includes the first AI task.

With reference to the fifth aspect, in some implementations of the fifth aspect, the at least one AI task includes a task of a first task type and/or a task of a second task type, the task of the first task type is an AI task provided by the second node for the first node, and the task of the second task type is an AI task that the second node needs the first node to assist in completing.

With reference to the fifth aspect, in some implementations of the fifth aspect, the first information further indicates at least one node type corresponding to the at least one AI task, and the at least one node type includes a first node type and/or a second node type, where the second node needs a node of the first node type to assist in completing an AI task corresponding to the first node type, and the second node supports providing, for a node of the second node type, a service of executing an AI task corresponding to the second node type.

With reference to the fifth aspect, in some implementations of the fifth aspect, before sending the second information to the second node, the transceiver unit is further configured to: send connection request information to the second node, where the connection request information is used to request to establish, with the second node, a connection for executing an AI task; and receive fourth information from the second node, where the fourth information is used to respond to the connection request information.

With reference to the fifth aspect, in some implementations of the fifth aspect, the fourth information includes resource configuration information, the resource configuration information is used to configure a first resource, and the transceiver unit is specifically configured to send the second information to the second node on the first resource, where the second information includes node description information, and the node description information includes one or more pieces of the following information about the first node: characteristic information of a dataset, model performance requirement information, or capability information. The dataset is used for model training and/or model inference of a first AI task.

With reference to the fifth aspect, in some implementations of the fifth aspect, the transceiver unit is further configured to receive fourth information from the second node, where the fourth information is used to respond to a connection establishment request.

With reference to the fifth aspect, in some implementations of the fifth aspect, the fourth information includes resource configuration information, the resource configuration information indicates a first resource, and the transceiver unit is further configured to send node description information to the second node on the first resource, where the node description information includes one or more pieces of the following information about the first node: characteristic information of a dataset, model performance requirement information, or capability information, where the dataset is used for model training and/or model inference of the first AI task.

With reference to the fifth aspect, in some implementations of the fifth aspect, the fourth information further includes information about the dataset corresponding to the first AI task, performance information of an intelligent model of the first AI task, and/or load information of the second node, where the information about the dataset indicates a characteristic of training data of the intelligent model and/or that the dataset is used to evaluate performance of the intelligent model of the first AI task.

With reference to the fifth aspect, in some implementations of the fifth aspect, the transceiver unit is further configured to receive connection determining information or connection failure information from the second node, where the connection determining information is used to determine to establish, with the first node, the connection for executing the first AI task, and the connection failure information indicates that the connection for executing the first AI task fails to be established with the first node.

With reference to the fifth aspect, in some implementations of the fifth aspect, the connection failure information further indicates a third node, and the third node is a node recommended by the second node to the first node for establishing a connection for executing the first AI task.

With reference to the fifth aspect, in some implementations of the fifth aspect, the first information includes identification information of each of the at least one AI task, or identification information and task type information of each AI task.

According to a sixth aspect, a communication apparatus is provided. In a design, the apparatus may include modules for performing the method/operations/steps/actions described in the second aspect. The modules may be hardware circuits, may be software, or may be implemented by using a combination of a hardware circuit and software. In a design, the apparatus includes: a processing unit, configured to determine first information, where the first information indicates at least one artificial intelligence AI task of a second node; and a transceiver unit, configured to send the first information. The transceiver unit is further configured to receive second information from a first node, where the second information is used to establish, with the second node, a connection for executing a first AI task, and the at least one AI task includes the first AI task.

With reference to the sixth aspect, in some implementations of the sixth aspect, the at least one AI task includes a task of a first task type and/or a task of a second task type, the task of the first task type is an AI task provided by the second node for the first node, and the task of the second task type is an AI task that the second node needs the first node to assist in completing.

With reference to the sixth aspect, in some implementations of the sixth aspect, the first information further indicates at least one node type corresponding to the at least one AI task, and the at least one node type includes a first node type and/or a second node type, where the second node needs a node of the first node type to assist in completing an AI task corresponding to the first node type, and the second node supports providing, for a node of the second node type, a service of executing an AI task corresponding to the second node type.

With reference to the sixth aspect, in some implementations of the sixth aspect, before receiving the second information from the first node, the transceiver unit is further configured to: receive connection request information from the first node, where the connection request information is used to request to establish, with the second node, a connection for executing an AI task; and send fourth information to the first node, where the fourth information is used to respond to the connection request information.

With reference to the sixth aspect, in some implementations of the sixth aspect, the fourth information includes resource configuration information, the resource configuration information is used to configure a first resource, and the transceiver unit is specifically configured to send the second information to the second node on the first resource, where the second information includes node description information, and the node description information includes one or more pieces of the following information about the first node: characteristic information of a dataset, model performance requirement information, or capability information. The dataset is used for model training and/or model inference of the first AI task.

With reference to the sixth aspect, in some implementations of the sixth aspect, the transceiver unit is further configured to receive fourth information from the second node, where the fourth information is used to respond to a connection establishment request of the first node.

With reference to the sixth aspect, in some implementations of the sixth aspect, the fourth information includes resource configuration information, the resource configuration information indicates a first resource, and the transceiver unit is further configured to receive node description information from the second node on the first resource, where the node description information includes one or more pieces of the following information about the first node: characteristic information of a dataset, model performance requirement information, or capability information, where the dataset is used for model training and/or model inference of the first AI task.

With reference to the sixth aspect, in some implementations of the sixth aspect, the fourth information further includes information about the dataset corresponding to the first AI task, performance information of an intelligent model of the first AI task, and/or load information of the second node, where the information about the dataset indicates a characteristic of training data of the intelligent model and/or that the dataset is used to evaluate performance of the intelligent model of the first AI task.

With reference to the sixth aspect, in some implementations of the sixth aspect, the transceiver unit is further configured to send connection determining information or connection failure information to the first node, where the connection determining information is used to determine to establish, with the first node, the connection for executing the first AI task, and the connection failure information indicates that the connection for executing the first AI task fails to be established with the first node.

With reference to the sixth aspect, in some implementations of the sixth aspect, the connection failure information further indicates a third node, and the third node is a node recommended by the second node to the first node for establishing a connection for executing the first AI task.

With reference to the sixth aspect, in some implementations of the sixth aspect, the first information includes identification information of each of the at least one AI task, or identification information and task type information of each AI task.

According to a seventh aspect, a communication apparatus is provided. In a design, the apparatus may include modules for performing the method/operations/steps/actions described in the third aspect. The modules may be hardware circuits, may be software, or may be implemented by using a combination of a hardware circuit and software. In a design, the apparatus includes: a processing unit, configured to determine connection request information, where the connection request information is used to request to establish, with a second node, a connection for executing an AI task; and a transceiver unit, configured to send the connection request information to the second node. The transceiver unit is further configured to receive fourth information from the second node, where the fourth information is used to respond to the connection request information.

With reference to the seventh aspect, in some implementations of the seventh aspect, the fourth information includes resource configuration information, the resource configuration information indicates a first resource, and the transceiver unit is further configured to send second information to the second node on the first resource, where the second information includes node description information, and the node description information includes one or more pieces of the following information about a first node: characteristic information of a dataset, model performance requirement information, or capability information. The dataset is used for model training and/or model inference of a first AI task.

With reference to the seventh aspect, in some implementations of the seventh aspect, the connection request information is specifically used to request to establish, with the second node, a connection for executing the first AI task, or the second information indicates to request to establish, with the second node, a connection for executing the first AI task.

With reference to the seventh aspect, in some implementations of the seventh aspect, the transceiver unit is further used by the first node to receive connection determining information or connection failure information from the second node, where the connection determining information is used to determine to establish, with the first node, the connection for executing the first AI task, and the connection failure information indicates that the connection for executing the first AI task fails to be established with the first node.

With reference to the seventh aspect, in some implementations of the seventh aspect, the connection failure information further indicates a third node, and the third node is a node recommended by the second node to the first node for establishing a connection for executing the first AI task.

With reference to the seventh aspect, in some implementations of the seventh aspect, the connection request information is specifically used to request to establish, with the second node, the connection for executing the first AI task, the fourth information indicates the third node, and the third node is the node recommended by the second node to the first node for establishing the connection for executing the first AI task.

According to an eighth aspect, a communication apparatus is provided. In a design, the apparatus may include modules for performing the method/operations/steps/actions described in the fourth aspect. The modules may be hardware circuits, may be software, or may be implemented by using a combination of a hardware circuit and software. In a design, the apparatus includes: a transceiver unit, configured to receive connection request information from a first node, where the second information is used to request to establish, with a second node, a connection for executing an AI task; and a processing unit, configured to determine that the first node requests to establish, with the second node, the connection for executing the AI task. The transceiver unit is further configured to send fourth information to the first node, where the fourth information is used to respond to the connection request information.

With reference to the eighth aspect, in some implementations of the eighth aspect, the fourth information includes resource configuration information, the resource configuration information indicates a first resource, and the transceiver unit is further configured to receive second information from the first node on the first resource, where the second information includes node description information, and the node description information includes one or more pieces of the following information about the first node: characteristic information of a dataset, model performance requirement information, or capability information. The dataset is used for model training and/or model inference of a first AI task.

With reference to the eighth aspect, in some implementations of the eighth aspect, the connection request information is specifically used to request to establish, with the second node, a connection for executing the first AI task, or the second information indicates to request to establish, with the second node, a connection for executing the first AI task.

With reference to the eighth aspect, in some implementations of the eighth aspect, the transceiver unit is further configured to send connection determining information or connection failure information to the first node, where the connection determining information is used to determine to establish, with the first node, the connection for executing the first AI task, and the connection failure information indicates that the connection for executing the first AI task fails to be established with the first node.

With reference to the eighth aspect, in some implementations of the eighth aspect, the connection failure information further indicates a third node, and the third node is a node recommended by the second node to the first node for establishing a connection for executing the first AI task.

With reference to the eighth aspect, in some implementations of the eighth aspect, the connection request information is specifically used to request to establish, with the second node, the connection for executing the first AI task, the fourth information indicates the third node, and the third node is the node recommended by the second node to the first node for establishing the connection for executing the first AI task.

According to a ninth aspect, a communication apparatus is provided, including a processor. The processor may implement the method according to any one of the first aspect or the third aspect and the possible implementations of the first aspect or the third aspect, or implement the method according to any one of the second aspect or the fourth aspect and the possible implementations of the second aspect or the fourth aspect.

Optionally, the communication apparatus further includes a memory. The processor is coupled to the memory, and may be configured to execute instructions in the memory, to implement the method according to any one of the first aspect or the third aspect and the possible implementations of the first aspect or the third aspect, or implement the method according to any one of the second aspect or the fourth aspect and the possible implementations of the second aspect or the fourth aspect. Optionally, the memory is integrated with the processor.

Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a communication device. When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a tenth aspect, a processor is provided, including an input circuit, an output circuit, and a processing circuit. The processing circuit is configured to: receive a signal through the input circuit, and transmit a signal through the output circuit, so that the processor performs the method according to any one of the first aspect or the third aspect and the possible implementations of the first aspect or the third aspect, or performs the method according to any one of the second aspect or the fourth aspect and the possible implementations of the second aspect or the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a computer program product is provided. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to a twelfth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a thirteenth aspect, a communication system is provided, including at least one first node and at least one second node in the foregoing descriptions.

### BRIEF DESCRIPTION OF DRAWINGS

FIG. 1 is a diagram of a communication system according to an embodiment of this application;
FIG. 2 is a diagram of interaction in a communication method according to an embodiment of this application;
FIG. 3 is a diagram of an indication manner of first information according to an embodiment of this application;
FIG. 4 to FIG. 8 are diagrams of other interaction in a communication method according to an embodiment of this application;
FIG. 9 is a diagram of a structure of a communication apparatus according to an embodiment of this application; and
FIG. 10 and FIG. 11 are diagrams of structures of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects. For example, A/B may represent A or B. "and/or" may indicate that there are three relationships between associated objects. For example, A and/or B may represent the following three cases: Only A exists, both A and B exist, and only B exists, where A and B may be singular or plural. For ease of describing the technical solutions in embodiments of this application, in embodiments of this application, terms such as "first" and "second" may be used for differentiation. The terms such as "first" and "second" do not limit a quantity and an execution sequence, and the terms such as "first" and "second" do not limit a definite difference. In embodiments of this application, the term such as "example" or "for example" represents an example, an evidence, or a description. Any embodiment or design solution described as "example" or "for example" should not be explained as being more preferred or having more advantages than another embodiment or design solution. The terms such as "example" or "for example" are used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, and a wireless fidelity (wireless fidelity, Wi-Fi) system. A communication method provided in this application may be further applied to a communication system evolved after 5G, another communication system, or the like, such as a 6th generation (6th generation, 6G) communication system. This is not limited in this application.

It should be understood that the communication method provided in this application may be applied to various scenarios, for example, may be applied to one or more of the following communication scenarios: enhanced mobile broadband (enhanced mobile broadband, eMBB), ultra-reliable and low-latency (ultra-reliable and low-latency communication, URLLC), massive machine-type communications (massive machine-type communications, mMTC), internet of things (Internet of Things, IoT), device-to-device (device-to-device, D2D), vehicle-to-everything (vehicle-to-everything, V2X), and the like. This is not limited in this application.

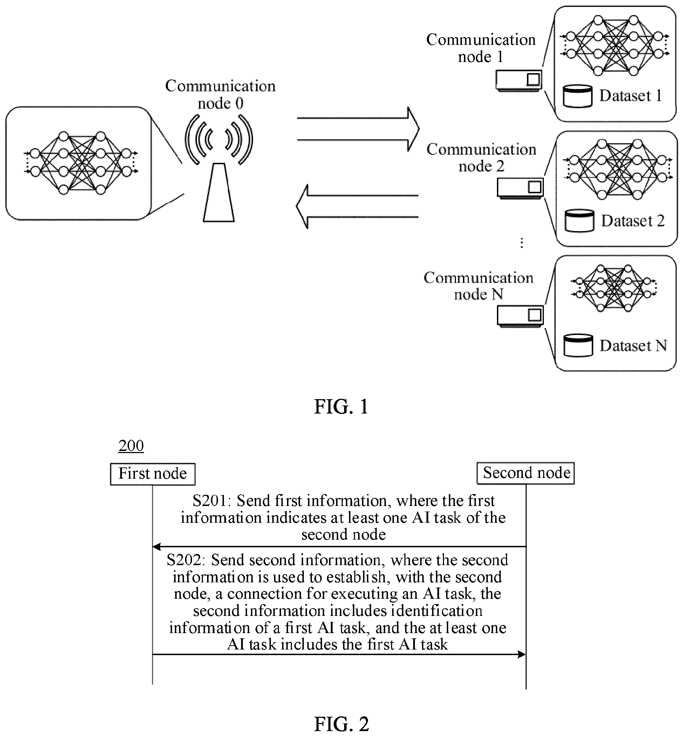

FIG. 1 is a diagram of a wireless communication system 100 applicable to an embodiment of this application.

As shown in FIG. 1, a communication system applicable to an embodiment of this application may include at least one communication node, for example, a communication node 0, a communication node 1, a communication node 2, ..., and a communication node N shown in FIG. 1. The communication node 0 may provide another communication node (for example, one or more of communication nodes 1, 2, ..., and N) with a service of executing an AI task, and/or the communication node 0 may jointly complete the AI task with the another communication node. However, this application is not limited thereto.

For example, the at least one communication node shown in FIG. 1 may perform federated learning, where the communication node 0 may serve as a central node that provides a model parameter for each communication node. The communication node 0, the communication node 1, the communication node 2, ..., and the communication node N may serve as distributed nodes to obtain a model parameter from the central node. After a model is updated based on the model parameter, an updated model is separately trained by using local datasets. For example, the communication node 1 trains the model by using a local dataset 1, the communication node 2 trains the model by using a local dataset 2, and the communication node N trains the model by using a local dataset N. After performing model training, a plurality of communication nodes send training results (for example, gradient information of the model parameter and/or a loss function) of current training to the central node. The central node obtains the training results from the plurality of communication nodes, combines the training results of the plurality of communication nodes, updates the model parameter based on a combined training result, and notifies each communication node, so that each communication node performs next model training. However, this application is not limited thereto.

For another example, the at least one communication node shown in FIG. 1 may perform split learning (split learning). For example, a complete neural network model in the split learning is split into a plurality of parts. For example, the neural network model is split into two sub-network models, one sub-network model is deployed on one communication node (for example, the communication node 1), and the other sub-network model is deployed on another communication node (for example, the communication node 0). A location at which the complete neural network is split is referred to as a "split layer". During forward inference, the communication node 1 inputs local data into a local sub-network model and performs inference to the split layer, to obtain a result output by the split layer. The communication node 1 sends the result to the communication node 0 over a communication link. The communication node 0 inputs, into a local sub-network model of the communication node 0, the result output by the communication node 1 through inference to the split layer, and continues to perform forward inference to obtain a final inference result. In gradient reverse transfer of model training, the communication node 0 reversely transfers a gradient to the split layer by using the sub-network model of the communication node 0, to obtain a reverse transfer result. The communication node 0 sends the reverse transfer result to the communication node 1, and the communication node 1 continues to perform gradient reverse transfer by using a local sub-network model. A sub-network model that is on the communication node 1 and that is obtained through training may be stored locally on the communication node 1 or on a specific model storage server. When one communication node 1 is innovatively added to a split learning system, the innovatively added communication node 1 may download a trained sub-network model of the communication node 1, and then perform model training based on local data. However, this application is not limited thereto.

In this application, an AI model is a specific method for implementing an AI function. The AI model represents a mapping relationship between an input and an output of the model. The AI model may be a neural network model, a random forest (random forest) model, a k-means (k-means) model, a support vector machine (support vector machine, SVM) model, a decision tree (decision tree) model, or another machine learning model. The AI model may be referred to as a model for short. An AI-related operation may include at least one of the following: data collection, model training, model information release, model inference (or referred to as inference, model prediction, prediction, or the like), inference result release, or the like.

The communication node (for example, one or more of a first node, a second node, the central node, and the distributed node) in embodiments of this application may be a device with a wireless transceiver function.

The communication node may be a network device, and the network device may be an access network device, a core network device, or another network device. For example, the network device may be a base station (base station), a NodeB (NodeB), an evolved NodeB (evolved NodeB, eNodeB or eNB), a transmission reception point (transmission reception point, TRP), a next generation NodeB (next generation NodeB, gNB) in a 5G communication system, an access network device in an open radio access network (open radio access network, O-RAN or open RAN), a base station in an evolved communication system after 5G such as 6G, an access node in a Wi-Fi system, a mobile switching center, a device that undertakes a base station function in device-to-device (device-to-device, D2D), vehicle-to-everything (vehicle-to-everything, V2X), and machine-to-machine (machine-to-machine, M2M) communication, and the like. Alternatively, the access network device may be a module or unit that implements some functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used by the access network device are not limited in this application. The 5G system may also be referred to as a new radio (new radio, NR) system. An access network node in this application may be the access network device, or may be a module or unit configured in the access network device.

Optionally, the network device may alternatively be an AI function node with an AI processing capability, and/or the network device may be connected to the AI function node. The AI function node may be directly connected to the access network device, or may be indirectly connected to the access network device via a third-party node. Optionally, the third-party node may be a core network node, for example, an access and mobility management function (access and mobility management function, AMF) node or a user plane function (user plane function, UPF) node.

The communication node may be a terminal, or may be referred to as a terminal device, user equipment (user equipment, UE), a mobile station, a mobile terminal, or the like. The terminal may be widely used in various scenarios for communication, and may be a terminal in a scenario including but not limited to at least one of the following: eMBB, URLLC, mMTC, D2D, V2X, machine-type communication (machine-type communication, MTC), IoT, virtual reality (virtual reality, VR), augmented reality (augmented reality, AR), industrial control, self-driving, telemedicine, a smart grid, smart furniture, a smart office, a smart wearable, smart transportation, a smart city, or the like. The terminal may be a mobile phone, a tablet computer, a computer with a wireless transceiver function, a wearable device, customer-premises equipment (customer-premises equipment, CPE), a point of sale (point of sale, POS) machine, a vehicle, an uncrewed aerial vehicle, a helicopter, an airplane, a ship, a robot, a robotic arm, a smart home device, or the like. A specific technology and a specific device form used by the terminal are not limited in this application.

Optionally, the terminal may alternatively be a node with an AI processing capability.

The network device and/or the terminal may be at a fixed location or movable. The network device and/or the terminal may be deployed terrestrially, including indoors or outdoors, or may be handheld or vehicle-mounted; may be deployed on a water surface; or may be deployed on an airplane, a balloon, and an artificial satellite in the air. An environment/scenario at which the network device and the terminal are located are not limited in this application. The network device and the terminal may be deployed in a same environment/scenario or different environments/scenarios. For example, the network device and the terminal are both deployed terrestrially. Alternatively, the network device is deployed terrestrially, and the terminal is deployed on the water surface. Examples are not enumerated.

The communication node provided in this application may have an AI function. For example, to support the AI function, an AI entity may be integrated into the communication node or a chip of the communication node.

It should be understood that a specific technology and a specific device form used by the communication node are not limited in this application.

For a problem that application of an AI technology is limited because some devices that have abundant data resources may not have a processing capability needed by the AI technology, and some devices that have the AI technology processing capability may have insufficient data resources, in this application, a communication node may indicate, by using sent information, an AI task that may be provided by the communication node and that is of an execution service and/or an AI task that needs to be completed with assistance, so that another communication node learns of the AI task of the communication node, and establishes, with the communication node based on a requirement, a connection for executing the AI task. In this way, a resource, for example, an AI processing capability resource and/or a data resource, can be shared between communication nodes, so that the communication nodes implement more functions by using the AI technology.

The following describes a communication method according to this application with reference to the accompanying drawings.

FIG. 2 is a schematic flowchart of a communication method 200 according to this application.

S201: A second node sends first information, where the first information indicates at least one AI task of the second node.

Correspondingly, a first node receives the first information from the second node.

Optionally, the first information includes identification information of each of the at least one AI task.

The identification information of the AI task may be predefined, so that the first node and the second node can reach a consensus on the identification information of the AI task.

Optionally, the at least one AI task includes an AI task of a first task type and/or an AI task of a second task type.

The AI task of the first task type is an AI task that may be provided by the second node for another node and that is of an execution service. The AI task of the second task type is an AI task that the second node needs the another node to assist in completing.

In Implementation 1, the second node indicates, by using the first information, the AI task that may be provided by the second node for the another node and that is of the execution service.

For example, the AI task of the first task type may be an AI task that may be provided by the second node and that is of a service of executing model training and/or model inference. For example, a plurality of iterative operations needs to be performed based on a large amount of training data for the model training. This imposes a high requirement on a hardware processing capability. The second node with a high processing capability may provide, for the another node (for example, a node with a low processing capability, but this application is not limited thereto), a task of performing the model training, and then provide a trained intelligent model for the another node. In this way, the node uses the intelligent model to perform inference, and the second node shares a processing capability resource with the another node. For another example, the second node may provide, for the another node based on an existing trained model, a service of executing an inference task. For example, the second node may obtain inference data from the another node, obtain an inference result by using an intelligent model through inference based on the inference data, and feed back the inference result to the another node. In this way, the second node shares a processing capability resource with the another node. This is not limited in this application.

After receiving the first information, the first node may determine, based on the first information, that the second node can provide, for the another node, at least one AI task of an execution service. The first node may determine whether the at least one AI task includes an AI task that the first node needs the second node to provide and that is of an execution service. If the at least one AI task includes the AI task, the first node may establish, with the second node, a connection for executing the AI task, so that the second node can provide, for the first node, a service of executing the AI task.

For example, the at least one AI task may include but is not limited to one or more tasks of a positioning task, a mobility prediction task, an energy saving service, a channel estimation task, a reference signal optimization task, an adaptive communication parameter adjustment task, a beam management task, a computer vision task, an end-to-end data transmission task, and a natural language processing task.

For example, the first node may be an intelligent wearable device with a low processing capability, for example, a smartwatch, and the second node may be a communication device with a high processing capability, for example, a mobile phone or an access network device. The smartwatch may receive first information from the access network device, and determine at least one AI task that can be provided by the access network device and that is of an execution service, where a plurality of AI tasks include a positioning task. If the smartwatch needs another device to provide, for the smartwatch, a service of executing the positioning task, the smartwatch may establish, with the access network device, a connection for executing the AI task, so that the access network device can execute the positioning task for the smartwatch, and the smartwatch obtains location information with high precision.

For another example, the first node may be a terminal device, the second node may be an AI function node, and the AI function node indicates, by using the first information, at least one AI task that may be provided and that is of an execution service, where the at least one AI task includes a computer vision task. For example, the computer vision task includes an image processing and modeling task. The terminal device may establish, with the AI function node, a connection for executing the image processing and modeling task, so that the AI function node can execute the image processing and modeling task for the terminal device. After the connection is established, the terminal device may provide training data for the AI function node. The AI function node performs model training based on the training data to obtain an image processing model used by the terminal device, and sends the image processing model to the terminal device. The terminal device may perform image processing by using the image processing model. For another example, the computer vision task includes an image processing task. The terminal device may establish, with the AI function node, a connection for executing the image processing task. After the connection is established, the terminal device may provide image data for the AI function node. The AI function node obtains a processing result based on the image data by using an image processing model, and sends the processing result to the terminal device.

It should be noted that in this application, AI tasks may be classified based on different dimensions. As shown in the foregoing example, the AI tasks may be classified based on functions. Alternatively, AI tasks may be classified based on communication protocol layers, for example, may be classified into a physical layer AI task, a medium access control (medium access control, MAC) layer AI task, an application layer AI task, and the like. This is not limited in this application.

For example, the first information may indicate that the at least one AI task of the second node includes the physical layer AI task, and the first node may determine whether the first node needs to establish, with the second node, a connection for executing the physical layer task. For example, the first node needs the another node to provide, for the first node, a service of executing a channel estimation task. The channel estimation task belongs to the physical layer AI task. After receiving the first information, the first node determines that the second node can provide a service of executing the physical layer AI task, and the first node may establish, with the second node, the connection for executing the physical layer AI task.

For another example, the first information may indicate that the at least one AI task of the second node includes the application layer AI task, and the first node may determine whether the first node needs to establish, with the second node, a connection for executing the application layer task. For example, the first node needs the another node to provide, for the first node, a service of executing a natural language processing task. The natural language processing task belongs to the application layer AI task. After receiving the first information, the first node determines that the second node can provide a service of executing the application layer AI task, and the first node may establish, with the second node, the connection for executing the natural language processing task. Similarly, in another implementation, for example, the first information may indicate that the second node needs the another node to assist in completing the physical layer AI task. If the first node can assist the second node in completing the physical layer AI task, the first node may establish, with the second node, the connection for executing the physical layer AI task. However, this application is not limited thereto.

In Implementation 1, the first node may consider, by default, that the at least one AI task indicated by the first information is the AI task that may be provided by the second node and that is of the execution service. Alternatively, the first information further indicates that the at least one AI task is the AI task that may be provided by the second node and that is of the execution service. The first node may determine, based on the first information, that the second node can provide a service of executing the at least one AI task.

In an example, the first information further indicates that a task type of the at least one AI task is the first task type. In other words, the at least one AI task is the AI task that is provided by the second node for the another node and that is of the execution service.

In another example, the first information further indicates that a node type corresponding to the at least one AI task is a first node type. An AI task corresponding to the first node type is an AI task that can be provided by the second node for a node of the first node type and that is of an execution service. In other words, a task type of the AI task corresponding to the first node type is the foregoing first task type. The node of the first node type may be referred to as a service request node. However, this application is not limited thereto.

In Implementation 2, the second node indicates, by using the first information, the AI task that the second node needs the another node to assist in completing.

In an example, when diversity of training data used by the second node to train an intelligent model does not satisfy a requirement, the second node may indicate, by using the first information, that the second node needs the another node to assist in completing the AI task. For example, after the second node establishes, with the first node, a connection for executing the AI task, the first node may provide training data for the second node, and the second node trains the intelligent model based on the training data provided by the first node. In this way, the first node and the second node share a data resource. Alternatively, the first node and the second node may perform federated learning, the first node and the second node jointly complete model training, and both the first node and the second node may obtain a trained intelligent model for data inference. In this way, the first node and the second node share a processing capability resource.

In another example, when performance of an intelligent model of the second node does not satisfy a requirement, the second node may indicate, by using the first information, that the second node needs the another node to assist in completing the AI task. After the second node establishes, with the first node, a connection for executing the AI task, the second node may provide training data, and the first node performs model training on an intelligent model based on the training data provided by the second node, and sends, to the second node, an intelligent model obtained through training. Alternatively, the first node and the second node may perform split learning, to obtain an intelligent model that satisfies the performance requirement. In this way, the first node and the second node share a processing capability resource.

For example, the at least one AI task may include but is not limited to one or more tasks of a positioning task, a mobility prediction task, a channel estimation task, a reference signal optimization task, an adaptive communication parameter adjustment task, a beam management task, a computer vision task, an end-to-end data transmission task, and a natural language processing task.

In this implementation, the first node may consider, by default, that the at least one AI task indicated by the first information is the AI task that the second node needs the another node to assist in completing. Alternatively, the first information further indicates that the at least one AI task is the AI task that the second node needs the another node to assist in completing. The first node may determine, based on the first information, that the second node needs the another node to assist in completing the at least one AI task.

In an example, the first information further indicates that a task type of the at least one AI task is the second task type. In other words, the at least one AI task is the AI task that the second node needs the another node to assist in completing.

In another example, the first information further indicates that a node type corresponding to the at least one AI task is a second node type. An AI task corresponding to the second node type is the AI task that the second node needs the another node to assist in completing. In other words, a task type of the AI task corresponding to the second node type is the foregoing second task type. A node of the second node type may be referred to as a service provision node. However, this application is not limited thereto.

In Implementation 3, the first information indicates the AI task that may be provided by the second node for the another node and that is of the execution service, and the AI task that the second node needs the another node to assist in completing.

Optionally, the first information further indicates a task type of each of the at least one AI task.

In an example, the first information includes identification information of each of the at least one AI task and task type information of each AI task.

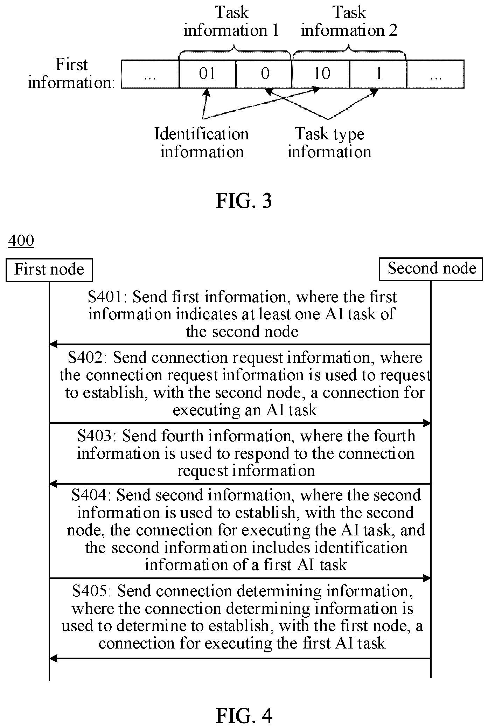

For example, AI tasks indicated by the first information include an AI task 1 and an AI task 2. The AI task 1 is a task of the first task type, and the AI task 2 is a task of the second task type. The first information includes the identification information of each AI task and the task type information of each AI task. For example, as shown in FIG. 3, the first information includes two pieces of task information, and each piece of task information includes one piece of 2-bit task identification information and one piece of 1-bit task type information. An indication "01" of 2-bit task identification information in task information 1 indicates the AI task 1, and an indication "0" of 1-bit task type information in the task information 1 indicates the first task type. The first node determines, based on the task information 1 in the first information, that a type of the AI task 1 of the second node is the first task type, to determine that the second node can provide, for the first node, a service of executing the AI task 1. As shown in FIG. 3, an indication "10" of 2-bit task identification information in task information 2 indicates the AI task 2, and an indication "1" of 1-bit task type information in the task information 2 indicates the second task type. The first node determines, based on the task information 2 in the first information, that a type of the AI task 2 of the second node is the second task type, to determine that the second node needs the another node to assist in completing the AI task 2.

In another example, the first information includes at least one piece of identification information. Each piece of identification information corresponds to one AI task and a task type corresponding to the AI task.

For example, a correspondence among identification information, an AI task, and a task type shown in Table 1 may be predefined. Identification information 0 corresponds to a task 1 and the first task type. This indicates that a task type of the task 1 is the first task type and the identification information is 0. Identification information 1 corresponds to a task 2 and the first task type. This indicates that a task type of the task 2 is the first task type and the identification information is 1. In Table 1, identification information 4 also corresponds to the task 2, but a task type corresponding to the identification information 4 is the second task type. This indicates that the task 2 may be used as a task of the first task type, and may also be used as a task of the second task type. For example, the task 2 may be a channel state information compression task. A communication node may provide, for the another node, a service of executing the channel state information compression task, and also request the another node to assist in completing the channel state information compression task. During specific implementation, a function of the AI task and a type of the task may be defined based on a requirement. This is not limited in this application.

The second node indicates one piece of identification information in the correspondence by using the first information. After receiving the first information, the first node may determine, based on the identification information indicated by the first information and the predefined correspondence, the AI task indicated by the first information and the task type of each AI task.

**Table 1**

| Identification information | AI task | Type |
|---|---|---|
| 0 | Task 1 | First task type |
| 1 | Task 2 | |
| 2 | Task 3 | |
| 3 | Task 4 | |
| 4 | Task 2 | Second task type |
| 5 | Task 3 | |
| 6 | Task 5 | |
| 7 | Task 6 | |
| 8 | Task 7 | |

In another example, the first information includes identification information of a task group. The identification information of the task group corresponds to the at least one AI task and a task type corresponding to each AI task.

For example, a plurality of task groups may be predefined. Each task group includes one or more AI tasks, and a task type of each AI task in each task group is defined. One AI task group may include a task of the first task type and/or a task of the second task type. The first information sent by the second node includes identification information of one of the plurality of task groups, and the second node determines, based on the task group corresponding to the identification information of the task group, at least one AI task in the task group indicated by the first information, and determines, based on predefined information, a task type corresponding to each of the at least one AI task.

Optionally, the first information further indicates a node type corresponding to each of the at least one AI task.

The second node indicates, by using the first information, a node type corresponding to an AI task, so that a communication node corresponding to the node type can learn of the AI task of the second node, to request to establish, with the second node, a connection for executing the AI task. For example, the first node is a communication node of the first node type, in other words, the first node needs to obtain, from the another node, a service of executing an AI task x. After the first node receives the first information, based on that the at least one AI task indicated by the first information includes the AI task x, and the first information further indicates that a node type corresponding to the AI task x is the first node type, the first node may establish, with the second node, a connection for executing the AI task x, to obtain, from the second node, the service of executing the AI task x.

A manner in which the first information indicates the node type corresponding to each of the at least one AI task is similar to the foregoing manner in which the first information indicates the task type corresponding to each of the at least one AI task. For implementation, refer to the foregoing manner. For brevity, details are not described herein again.

The first information may be broadcast information, multicast information, or unicast information.

For example, the second node may broadcast or multicast the first information, and one or more communication nodes may receive the first information, so that a communication node that satisfies a requirement can establish, with the second node, a connection for executing the AI task. For example, the second node may be an access network device, and the first information may be carried in a master information block (master information block, MIB) or a system information block (system information block, SIB) sent by the access network device. However, this application is not limited thereto. Alternatively, the first information is unicast information sent by the second node to the first node, and the second node notifies the first node of the at least one AI task of the second node by using the first information. This is not limited in this application.

Optionally, the second node periodically sends the first information. Alternatively, the second node sends the first information when a sending condition is satisfied.

By way of example and not limitation, the sending condition may include: load of the second node being less than a load threshold and/or performance of the intelligent model of the second node being less than a performance threshold.

For example, when the load of the second node is less than the load threshold, there is an idle processing capability and/or idle processing space to provide, for the another node, a service of executing the AI task. The second node may send the first information, so that a communication node (for example, the first node) that needs to obtain the service of executing the AI task can learn that the second node can provide an AI task of the execution service, and when the second node provides an AI task that satisfies a requirement, the communicate node establishes, with the second node, a connection for executing the AI task.

For another example, when the performance of the intelligent model of the second node is less than the performance threshold, the second node may send the first information, so that a communication node that can assist the second node in completing an AI task can learn of a requirement of the second node, and when the assistance can be provided for the second node, the communication node establishes, with the second node, a connection for executing the AI task.

S202: The first node sends second information to the second node, where the second information is used to establish, with the second node, a connection for executing a first AI task, and the at least one AI task includes the first AI task.

After receiving the first information, the first node obtains the at least one AI task of the second node. If the at least one AI task includes the first AI task that satisfies a requirement of the first node, for example, the first AI task is an AI task that the first node needs to obtain and that is of an execution service, or the first AI task is an AI task in which the first node can provide assistance. The first node may send the second information to the second node, where the second information includes identification information of the first AI task, so that the first node establishes, with the second node, the connection for executing the AI task. Correspondingly, the second node receives the second information from the first node, and learns that the first node needs to establish, with the second node, the connection for executing the first AI task.

Optionally, the second information may include identification information of one or more AI tasks, and the one or more AI tasks include the first AI task. In other words, if the AI task of the second node includes a plurality of AI tasks that satisfy the requirement of the first node, the first node may notify, by using identification information that is of an AI task and that is in the second information, the second node to establish a connection for executing the plurality of AI tasks. Task types or corresponding node types of the plurality of AI tasks may be the same or different. This is not limited in this application.

Optionally, the first node may receive AI tasks of a plurality of communication nodes that are broadcast by the plurality of communication nodes, and the first node may determine the second node from the plurality of communication nodes based on communication quality of the plurality of communication nodes and whether the AI task that satisfies the requirement of the first node is included. For example, the second node is a node that is in the plurality of communication nodes, that includes the AI task that satisfies the requirement of the first node, and whose communication quality satisfies a requirement. The first node sends the second information to the second node, to establish, with the second node, the connection for executing the AI task.

According to the foregoing solution, the second node sends the first information to notify another communication node of the AI task of the second node. For example, the AI task may include but is not limited to one or more of the following: an AI task that the second node can provide, or an AI task that the second node needs assistance to complete, so that a communication node that receives the first information (for example, the first node) can learn of the AI task of the second node, and the first node can establish, with the second node based on a requirement, a connection for executing an AI task needed by the first node. In this way, communication nodes can share resources, for example, an AI processing capability resource (for example, the second node with a relatively high processing capability provides an AI execution service for the first node with a relatively low processing capability, but this application is not limited thereto) and/or a data resource (for example, the first node provides training data for the second node, but this application is not limited thereto), so that the communication nodes implement more functions by using AI technologies.

FIG. 4 is a schematic flowchart of a communication method 400 according to this application. In the communication method 400, after receiving first information from a second node, a first node may send, to the second node, connection request information used to request to establish a connection. After receiving response information (that is, fourth information) of a connection request, the first node sends second information to the second node, and notifies the second node to specifically request to establish a connection for executing a first AI task. In this way, the first node and the second node reach a preliminary consensus on establishing a connection for executing an AI task, and then exchange, through subsequent steps, a requirement for establishing the connection, a capability of executing the AI task, and the like, so that both parties determine whether to establish the connection for executing the AI task.

S401: The second node sends the first information, where the first information indicates at least one AI task of the second node.

Correspondingly, the first node receives the first information. For S401, refer to the descriptions of S201 in the embodiment shown in FIG. 2. For brevity, details are not described herein again.

Optionally, the first node may receive, from a plurality of nodes, a plurality of pieces of information that indicate AI tasks of the nodes, where the plurality of pieces of information include the first information from the second node. The first node may determine, based on the plurality of pieces of information, to establish, with the second node in the plurality of nodes, the connection for executing the AI task. A process in which the first node receives the plurality of pieces of information from the plurality of nodes, and determines, in the plurality of nodes, to establish, with which node, a connection for executing the AI task may be referred to as an AI service area search process (or referred to as an AI service area search phase). After the first node determines to establish, with the second node, the connection for executing the AI task, the first node may perform an AI service area access process (or referred to as an AI service area access phase). The AI service area access process may include but is not limited to the following S402, S403, S404, and S405.

S402: The first node sends the connection request information to the second node, where the connection request information is used to request to establish, with the second node, the connection for executing the AI task.

Correspondingly, the second node receives the connection request information from the first node.

After the first node receives the first information from the second node in S401, the first node determines that the first AI task of the second node satisfies a requirement of the first node, for example, the first AI task is an AI task that the first node needs to obtain and that is of an execution service, or the first AI task is an AI task in which the first node can provide assistance. The first node may send the connection request information to the second node, to request to establish, with the second node, the connection for executing the AI task.

Optionally, the connection request information may be a preamble (preamble).

The first node sends, to the second node on a second resource, a preamble of requesting to establish the connection for executing the AI task. Correspondingly, the second node detects the preamble on the second resource, and after detecting the preamble from the first node, determines that a node needs to establish a connection for executing the AI task. The preamble is used as the connection request information, so that the first node and the second node may generate the preamble in a sequence generation manner without performing operations such as information modulation, demodulation, encoding, and decoding, the second node may determine, on the second resource based on detection related to the generated preamble, whether a communication node requests to establish a connection. This reduces implementation complexity and improves connection establishment efficiency.

In an example, the first information further indicates the second resource that is used to carry the connection request information, and the first node determines, based on the first information, to send the connection request information on the second resource.

In another example, the second resource may be a resource specified in advance, for example, a resource on which the first node and the second node reach a consensus through information exchange, or may be predefined by using a communication protocol.

S403: The second node sends the fourth information to the first node, where the fourth information is used to respond to the connection request information.

Correspondingly, the first node receives the fourth information from the second node.

After receiving a connection establishment request from the first node, the second node sends, to the second node, the fourth information that is used to respond to the connection establishment request. For example, the connection request information is the preamble. The second node detects the preamble on the second resource. If the preamble that is from the first node and that is used as the connection establishment request is detected, the second node learns that the first node needs to establish the connection for executing the AI task, and the second node sends the fourth information to the first node in response to the connection request of the first node. In this way, the first node and the second node reach a preliminary consensus on establishing the connection for executing the AI task, and then exchange, through subsequent steps, a requirement for establishing the connection, a capability of executing the AI task, and the like, so that both parties determine whether to establish the connection for executing the AI task.

Optionally, the fourth information includes resource configuration information, the resource configuration information is used to configure a first resource, and the first resource is used to carry the second information sent by the first node to the second node in a next step.

S404: The first node sends the second information to the second node, where the second information is used to establish, with the second node, the connection for executing the first AI task, and the second information includes identification information of the first AI task.

The at least one AI task indicated by the first information includes the first AI task.

Optionally, the second information further indicates an Al task type and/or a node type of the first node.

For example, the first information does not indicate a task type of the at least one AI task or a corresponding node type. The first node may notify, by using the second information, the second node to specifically establish, with the second node, the connection for executing the first AI task, and needs the second node to provide a service of executing the first AI task, or assists the second node in completing the first AI task.

For another example, the first information indicates a task type of the at least one AI task or a corresponding node type, and the first AI task is both a task of a first task type and a task of a second task type. By indicating the AI task type and/or the node type of the first node, the first node notifies the second node that the second node is specifically needed to provide the service of executing the first AI task; and/or the first node assists the second node in completing the first AI task. Alternatively, the first information indicates that the first AI task is a task of a task type, and the first node determines a task type of the first AI task based on the second information.

The second information includes node description information, and the node description information includes one or more pieces of the following information about the first node: characteristic information of a dataset, model performance requirement information, or capability information, where the dataset is used for model training and/or model inference of the first AI task.

For example, the first node is a node of a first node type, and needs the second node to provide the service of executing the first AI task. If the first AI task is a channel estimation task, the first node requests the second node to obtain channel information for the first node through inference by using a channel information inference model. The description information may include characteristic information of a to-be-inferred dataset, for example, a distribution parameter of the dataset. The description information may further include the model performance requirement information, to notify the second node of a performance requirement of the first node for an inference model. In this way, the second node determines, based on the characteristic information of the dataset and the model performance requirement information, whether a service can be specifically provided for the first node. The second node may further select, from a plurality of inference models, an inference model that can satisfy the model performance requirement of the first node. However, this application is not limited thereto.

For another example, the first node is a node of a second node type, and may assist the second node in completing the first AI task. For example, the description information may include the characteristic information of the dataset, so that the second node can determine, based on the characteristic information of the dataset, whether a training requirement for training an intelligent model, for example, a diversity requirement of training data, is satisfied. The description information may further include the capability information of the first node, and the capability information may be a processing capability, a storage capability, and/or the like. In this way, the second node can determine, based on the capability information of the first node, whether the first node may assist the second node in completing the first AI task. However, this application is not limited thereto.

S405: The second node sends connection determining information to the first node, where the connection determining information is used to determine to establish, with the first node, the connection for executing the first AI task.

After receiving the second information from the first node, the second node determines, based on the description information, one or more of the following: whether the second node satisfies a requirement of the first node for the first AI task or whether the first node satisfies a requirement of the second node for the first AI task. If the requirement is satisfied, the second node may send the connection determining information to the first node, and determine to establish, with the first node, the connection for executing the first AI task, in other words, notify the first node that the connection is agreed to be established with the first node. The second node may start one or more of the following: providing, for the first node, the service of executing the first AI task, or the first node and the second node may start to jointly complete the first AI task. In this way, a resource is shared and an AI technology is used to implement more functions.

If the second node determines that a requirement for executing the first AI task cannot be satisfied, the second node does not send the connection determining information to the first node.

Optionally, the second node may send connection failure information to the first node, to indicate that the connection for executing the first AI task fails to be established the first node, or indicates that the second node refuses to establish the connection for executing the first AI task.

Optionally, the connection failure information further indicates a third node, and the third node is a node recommended by the second node to the first node for establishing a connection for executing the first AI task.

When the second node determines that the requirement for executing the first AI task cannot be satisfied, the second node may recommend, to the first node based on the connection failure information, the third node that can satisfy the requirement for executing the first AI task. For example, the third node may provide, for the first node, the service of executing the first AI task, so that the first node can quickly find a node for executing the first AI task. However, this application is not limited thereto.

According to the foregoing solution, the second node sends the first information to notify another communication node of an AI task of the second node. For example, the AI task may include but is not limited to one or more of the following: an AI task that the second node can provide, or an AI task that the second node needs assistance to complete. A communication node that receives the first information (for example, the first node) may learn of the AI task of the second node, so that the first node can establish, with the second node based on a requirement, a connection for executing an AI task needed by the first node. In this way, a resource, for example, an AI processing capability resource and/or a data resource, can be shared between communication nodes, so that the communication nodes implement more functions by using the AI technology.

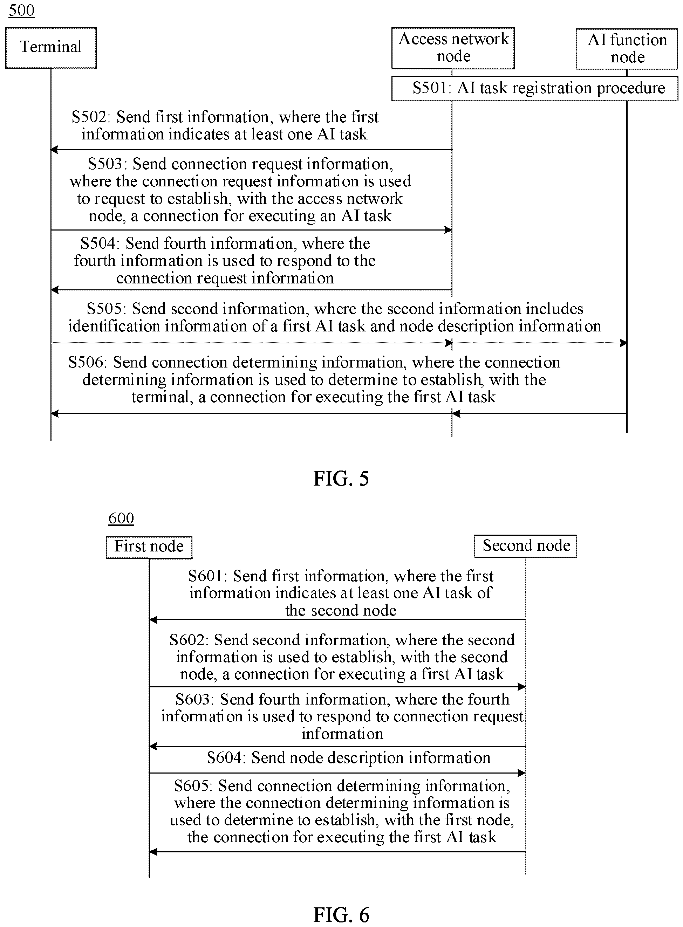

FIG. 5 is a schematic flowchart of a communication method 500 according to this application. In the communication method 500, a connection for executing an AI task may be established between two nodes (for example, a terminal and an AI function node) via a third-party node (for example, an access network node) other than the two nodes, to share a resource. For example, the terminal may learn, based on first information from the access network node, one or more pieces of the following information: an AI task that can be provided by a network in which the access network node is located and that is of an execution service, or an AI task that the network in which the access network node is located needs the terminal to assist in completing. The terminal requests, based on connection request information, to establish a connection, and after receiving response information of a connection request from the access network node, sends second information to the second node, to notify the second node to specifically request to establish a connection for executing a first AI task. In FIG. 5, the terminal, the access network node, and the AI function node are used as an example for description. It should be understood that a specific form of an execution body of performing the communication method 500 is not limited in this application. It should be noted that the access network node and the AI function node shown in FIG. 5 may be different apparatuses or different logical units in a communication device. Alternatively, the access network node and the AI function node shown in FIG. 5 do not belong to a same communication device. For example, the access network node and the AI function node are separately a communication device. Alternatively, the access network node and the AI function node are apparatuses or logical units separately configured in different devices. This is not limited in this application. For a part in the embodiment in FIG. 5 that is the same as that in the foregoing embodiment, refer to the foregoing descriptions for implementation. For brevity, details are not described herein again.

S501: The access network node and the AI function node perform an AI task registration procedure.

The AI function node may perform registration on the access network node. The access network node may determine one or more AI tasks of the AI function node by using the AI task registration procedure. The one or more AI tasks may include but are not limited to one or more of the following: an AI task that can be provided by the AI function node and that is of an execution service, or an AI task that the AI function node needs the terminal to assist in completing. The AI function node may establish, with the terminal via the access network node, the connection for executing the AI task.

Optionally, one access network node may register one or more AI function nodes.

For example, the access network node may maintain an AI task registry shown in Table 2. The AI task registry includes an address of the AI function node and identification information of an AI task of each AI function node. As shown in Table 2, AI tasks of an AI function node at an address 1 include an AI task 1, an AI task 2, an AI task 3, and the like, and AI tasks of an AI function node at an address 2 include an AI task 4, an AI task 5, and the like. However, this application is not limited thereto. Optionally, the address of the AI function node in the AI task registry may be replaced with identification information with another identification function, or the AI task registry further includes identification information, other than the address, of the AI function node.

**Table 2**

| Address of the AI function node | Identification information of the AI task |
|---|---|
| Address 1 | 1, 2, 3, and ... |
| Address 2 | 4, 5, and ... |
| ... | ... |

S502: The access network node sends the first information, where the first information indicates at least one AI task.

The access network node sends the first information, to indicate at least one AI task of the network in which the access network node is located, for example, indicate one or more of the following: an AI task that can be provided by the network in which the access network node is located and that is of an execution service, or an AI task that needs to be completed with assistance of the terminal. For a specific indication manner, refer to the foregoing descriptions. For brevity, details are not described herein again. The first information may be a MIB or a SIB sent by the access network node.

S503: The terminal sends the connection request information to the access network node, where the connection request information is used to request to establish, with the access network node, a connection for executing an AI task.

After receiving the first information from the access network node, the terminal may send the connection request information to the access network node, to request to establish, with the access network node, the connection for executing the AI task.

By way of example and not limitation, the connection request information may be a preamble.

S504: The access network node sends fourth information to the terminal, where the fourth information is used to respond to the connection request information.

The access network node may send the fourth information to the terminal in response to a connection request of the terminal.

S505: The terminal sends the second information to the access network node, where the second information includes identification information of the first AI task and node description information. The access network node forwards the second information to the AI function node.

After receiving the second information from the terminal, the access network node may perform transparent transmission of the second information to the AI function node, or the access network node forwards the second information to the AI function node after reading content of the second information.

For example, the access network node is connected to one AI function node. After receiving the second information, the access network device performs the transparent transmission of the second information to the AI function node. However, this application is not limited thereto.

For another example, the access network node is connected to a plurality of AI function nodes. The access network node receives the second information, may determine, based on the identification information of the first AI task, an AI function node corresponding to the first AI task, and forwards the second information to the AI function node corresponding to the first AI task.

S506: The AI function node sends connection determining information to the terminal, where the connection determining information is used to determine to establish, with the terminal, a connection for executing the first AI task.

The connection determining information is forwarded by the access network node to the terminal. If determining that a requirement for executing the first AI task can be satisfied, the AI function node sends the connection determining information to the terminal. If a requirement for executing the first AI task cannot be satisfied, the AI function node does not send the connection determining information to the terminal. Optionally, the AI function node may send connection failure information to the terminal.

According to the foregoing solution, the connection for executing the AI task may be established between the two nodes (for example, the terminal and the AI function node) via the third-party node (for example, the access network node) other than the two nodes, to share the resource, for example, an AI processing capability resource and/or a data resource, so that the communication nodes implement more functions by using an AI technology.

FIG. 6 is a schematic flowchart of a communication method 600 according to this application. In the communication method 600, after receiving first information from a second node, a first node sends second information to the second node, and notifies, by using the second information, the second node to request to establish a connection for executing a first AI task. The second node may send response information to the first node based on that the first node needs to establish the connection for the first AI task. After receiving the response information, the first node may send node description information to the second node, so that the second node determines, based on the node description information, whether a requirement for executing the first AI task can be satisfied, to determine whether to establish, with the first node, the connection for executing the first AI task.

It should be noted that, for a part in the embodiment in FIG. 6 that is the same as that in the foregoing embodiment, refer to the foregoing descriptions for implementation. For brevity, details are not described herein again.

S601: The second node sends the first information, where the first information indicates at least one AI task of the second node.

Correspondingly, the first node receives the first information.

S602: The first node sends the second information to the second node, where the second information is used to establish, with the second node, the connection for executing the first AI task.

The at least one AI task indicated by the first information includes the first AI task.

The second information may include a preamble corresponding to the first AI task. The first node may send the preamble corresponding to the first AI task, and indicate the first AI task by using the preamble. After receiving the preamble corresponding to the first AI task, the second node may determine that the first node requests to establish, with the second node, the connection for executing the first AI task.

For example, preambles corresponding to a plurality of AI tasks may be predefined. The first node may determine, based on identification information of an AI task indicated by the first information, the preamble corresponding to the AI task. For example, the first node needs to request to establish, with the second node, the connection for executing the first AI task, the first node determines, based on the predefined information, the preamble corresponding to the first AI task, and sends the preamble to the second node.

For another example, the first information further indicates a preamble corresponding to each of the at least one AI task. For example, the first information includes the preamble corresponding to each of the at least one AI task, or includes identification information of the preamble corresponding to each of the at least one AI task. The first node determines, based on the first information, the preamble corresponding to the first AI task.

Optionally, the first information further indicates a task type of each of the at least one AI task or a node type corresponding to each AI task. The preamble indicated by the first information corresponds to an AI task, and also corresponds to a task type of the AI task or a node type corresponding to the AI task.

The first node sends the preamble corresponding to the first AI task. Based on the preamble, the second node may determine that the first node requests the first AI task, and determine a task type of the first AI task, or determine a node type of the first node.

In an optional implementation, the first information may include a plurality of pieces of identification information, and one piece of identification information indicates one AI task, a preamble corresponding to the AI task, and a task type of the AI task.

For example, a correspondence shown in Table 3 may be predefined. The first node and the second node reach a consensus on the correspondence shown in Table 3. After receiving the first information, the first node may determine each AI task of the second node based on the identification information and the correspondence, a preamble corresponding to each AI task and a task type of each AI task. For example, the first AI task is a task 4, and the first information sent by the second node includes identification information 3. The first node determines the task 4, a preamble 4, and a first task type that are of the identification information 3 based on the correspondence. In this case, the first node determines that the second node can provide a service that is needed by the first node and that is for executing the task 4, and the first node sends the preamble 4 to the second node to request to establish, with the second node, a connection for executing the task 4. Correspondingly, after receiving the preamble 4, the second node may determine, based on the correspondence, that the first node requests to establish the connection for executing the task 4.

**Table 3**

| Identification information | AI task | Preamble | Type |
|---|---|---|---|
| 0 | Task 1 | Preamble 1 | First task type |
| 1 | Task 2 | Preamble 2 | |
| 2 | Task 3 | Preamble 3 | |
| 3 | Task 4 | Preamble 4 | |
| 4 | Task 2 | Preamble 5 | Second task type |
| 5 | Task 3 | Preamble 6 | |
| 6 | Task 5 | Preamble 7 | |
| 7 | Task 6 | Preamble 8 | |
| 8 | Task 7 | Preamble 9 | |

The type in Table 3 may be further replaced with the node type corresponding to the AI task, and the node type represents the task type of the AI task. Details are not described herein again.

In an optional implementation, the second information may indicate the first AI task, and a resource that carries the second information may indicate the task type. For example, it may be predefined that a plurality of resources correspond to a plurality of task types. The first node sends the second information to the second node on a predefined resource corresponding to a needed AI task type. The second information carried on the predefined resource represents that the first node establishes, with the second node, a connection for a first AI task of a task type corresponding to the predefined resource.

For example, it is predefined that a third resource corresponds to the first task type, and a fourth resource corresponds to the second task type. The first node may need to establish, with the second node, a connection for executing a first AI task of the first task type, and also need to establish, with the second node, a connection for executing a first AI task of the second task type. The first node may separately send, to the second node on the third resource and the fourth resource, one piece of second information indicating the first AI task. The second information sent by the first node may include the preamble corresponding to the first AI task, and the first node indicates the first AI task by using the preamble. After receiving, on the fourth resource, the preamble corresponding to the first AI task, the second node may determine, based on the preamble, that the first node requests to establish the connection for executing the first AI task corresponding to the preamble, and determine, based on the fourth resource that carries the second information, that the first node specifically requests to establish the connection for executing the first AI task of the first task type, that is, determine that the first node needs the second node to provide a service of executing the first AI task. After receiving, on the fifth resource, the preamble corresponding to the first AI task, the second node may determine the first AI task based on the preamble, and determine, based on the fifth resource, that the first node requests to establish, with the second node, the connection for executing the first AI task of the second task type corresponding to the fifth resource, that is, determine that the first node may assist the second node in completing the first AI task. For example, for the first AI task that is requested by the first node and that is of the second task type, the first node may provide, for the second node, model training data, to assist the second node in completing the first AI task such as a model training task. For the first AI task that is requested by the first node and that is of the first task type, the second node performs model training for the first AI task based on the model training data, and sends, to the first node after the model training, an intelligent model that satisfies an inference performance requirement. In other words, the second node provides, for the first node, a service of executing the model training task.

For example, a correspondence between the AI task and the preamble shown in Table 4 may be predefined, and the first node and the second node reach a consensus on the correspondence shown in Table 4.

**Table 4**

| Identification information | AI task | Preamble |
|---|---|---|
| 0 | Task 1 | Preamble 1 |
| 1 | Task 2 | Preamble 2 |
| 2 | Task 3 | Preamble 3 |
| 3 | Task 4 | Preamble 4 |
| 4 | Task 2 | Preamble 5 |
| 5 | Task 3 | Preamble 6 |
| 6 | Task 5 | Preamble 7 |
| 7 | Task 6 | Preamble 8 |
| 8 | Task 7 | Preamble 9 |

Optionally, the first node sends the second information to the second node on a preset resource corresponding to an AI task, where the second information is used to establish, with the second node, a connection for executing a first AI task whose content is the AI task corresponding to the resource. A process is similar to that in the foregoing example. Details are not described again.

S603: The second node sends fourth information to the first node, where the fourth information is used to respond to a connection establishment request of the first node.

Correspondingly, the first node receives the fourth information from the second node.

Optionally, the fourth information includes resource configuration information, the resource configuration information is used to configure a first resource, and the first resource is used to carry description information sent by the first node to the second node in a next step.

Optionally, the fourth information further indicates one or more pieces of the following information: load information of the second node, identification information of a reference dataset used to evaluate performance of a first intelligent model, performance information of the first intelligent model, or characteristic information of a dataset of the first intelligent model.

The first intelligent model is an intelligent model used to execute the first AI task.

For example, the first AI task is a task of the first task type, and the fourth information indicates the load information of the second node, the identification information of the reference dataset used to evaluate the performance of the first intelligent model, and the performance information of the first intelligent model. The first node may determine, based on the fourth information, whether the first intelligent model of the second node satisfies a requirement of the first node, to determine whether the second node can provide, for the first node, a service that satisfies the requirement and that is for executing the first AI task. Optionally, the fourth information may further include characteristic information of a training dataset of the first intelligent model, to indicate a characteristic of the training dataset of the first intelligent model obtained through training. For example, the characteristic of the training dataset may be a distribution parameter. However, this application is not limited thereto.

For another example, the first AI task is a task of the second task type, and after the first node notifies, by using the second information, that the second node may assist in completing the first task, the second node may indicate characteristic information of a training dataset of the first intelligent model by using the fourth information, so that the first node determines whether training data that satisfies a data characteristic needed by the second node exists. However, this application is not limited thereto.

S604: The first node sends the node description information to the second node.

Correspondingly, the second node receives the node description information from the first node. The node description information includes but is not limited to one or more pieces of the following information about the first node: characteristic information of a dataset, model performance requirement information, or capability information, where the dataset is used for model training and/or model inference of the first AI task.

If the second information sent by the first node to the second node does not indicate a node type and/or a task type, the node description information further includes node type information, to indicate that the node type of the first node is a first node type or a second node type. After receiving the node description information, the second node may determine the node type of the first node, and determine, based on the node description information, whether the requirement for executing the first AI task can be satisfied, for example, whether the second node can satisfy a quality of service requirement (a model performance requirement or the like) that is needed by the first node and that is for executing the first AI task, or whether the dataset of the first node satisfies a training data characteristic needed by the second node. However, this application is not limited thereto.

S605: The second node sends connection determining information to the first node, where the connection determining information is used to determine to establish, with the first node, the connection for executing the first AI task.

For example, if the requirement for executing the first AI task can be satisfied, the second node may send the connection determining information to the first node, and determine to establish, with the first node, the connection for executing the first AI task, in other words, notify the first node that the connection is agreed to be established with the first node. If the second node determines that the requirement for executing the first AI task cannot be satisfied, the second node does not send the connection determining information to the first node. Optionally, the second node may send connection failure information to the first node.

According to the foregoing solution, the second node sends the first information to notify another communication node of the AI task of the second node. The AI task includes but is not limited to one or more of the following: an AI task that the second node can provide, or an AI task that the second node needs assistance to complete, so that a communication node that receives the first information (for example, the first node) can learn of the AI task of the second node. In this way, the first node can establish, with the second node based on a requirement, a connection for executing an AI task needed by the first node. In this way, a resource, for example, an AI processing capability resource and/or a data resource, can be shared between communication nodes, so that the communication nodes implement more functions by using an AI technology.

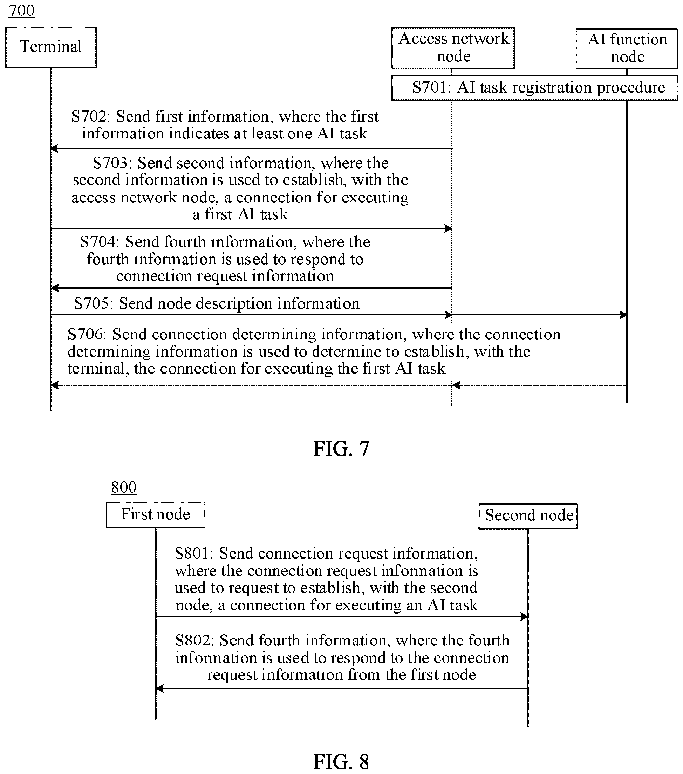

FIG. 7 is a schematic flowchart of a communication method 700 according to an embodiment of this application. In the communication method 700, a connection for executing an AI task may be established between two nodes (for example, a terminal and an AI function node) via a third-party node (for example, an access network node) other than the two nodes, to share a resource. After learning of an AI task of a network, the terminal requests, based on connection request information, to establish a connection for a first AI task, and after receiving response information of a connection request from the access network node, sends node description information to the access network node, and the access network node forwards the node description information to the AI function node, so that the AI function node determines, based on the node description information, whether a requirement for executing the first AI task can be satisfied, to determine whether to establish, with a first node, a connection for executing the first AI task. In FIG. 7, the terminal, the access network node, and the AI function node are used as an example for description. It should be understood that a specific form of an execution body of performing the communication method 700 is not limited in this application. It should be noted that the access network node and the AI function node shown in FIG. 7 may be different apparatuses or different logical units in a communication device. Alternatively, the access network node and the AI function node shown in FIG. 7 do not belong to a same communication device. For example, the access network node and the AI function node are separately a communication device. Alternatively, the access network node and the AI function node are apparatuses or logical units separately configured in different devices. This is not limited in this application. For a part in the embodiment in FIG. 7 that is the same as that in the foregoing embodiment, refer to the foregoing descriptions for implementation. For brevity, details are not described herein again. S701 and S702 shown in FIG. 7 may be implemented with reference to descriptions of S501 and S502 shown in FIG. 5. S703 shown in FIG. 7 may be implemented with reference to descriptions of S602 shown in FIG. 6.

S704: The access network node sends fourth information to the terminal, where the fourth information is used to respond to the connection request information.

Optionally, the fourth information includes resource configuration information.

Optionally, the fourth information further indicates one or more pieces of the following related information about the AI function node: load information of the AI function node, identification information of a reference dataset used to evaluate performance of a first intelligent model, performance information of the first intelligent model, or characteristic information of a dataset of the first intelligent model.

In an implementation, the access network node may obtain the related information about the AI node from the AI function node in a registration procedure.

In another implementation, after receiving the second information from the terminal, the access network node may notify the AI function node that the terminal requests to establish the connection for executing the first AI task. After learning that the terminal requests to establish the connection for executing the first AI task, the AI function node sends the related information about the AI function node to the access network node.

S705: The terminal sends the node description information to the access network node.

After receiving the node description information from the terminal, the access network node forwards the node description information to the AI function node. Optionally, after receiving the second information, the access network node may notify the AI function node that the terminal requests to establish the connection for executing the first AI task. Alternatively, the access network node may send the node description information from the terminal to the AI function node after receiving the node description information from the terminal, and send indication information indicating that the terminal requests to establish the connection for executing the first AI task. This is not limited in this application.

S706: The AI function node sends connection determining information to the terminal, where the connection determining information is used to determine to establish, with the terminal, the connection for executing the first AI task.

The connection determining information is forwarded by the access network node to the terminal. If determining that the requirement for executing the first AI task can be satisfied, the AI function node sends the connection determining information to the terminal. If the requirement for executing the first AI task cannot be satisfied, the AI function node does not send the connection determining information to the terminal. Optionally, the AI function node may send connection failure information to the terminal.

According to the foregoing solution, the connection for executing the AI task may be established between the two nodes via the third-party node other than the two nodes, to share a resource, for example, an AI processing capability resource and/or a data resource, so that the communication nodes implement more functions by using an AI technology.

The foregoing describes a manner in which a communication node may indicate an AI task of the communication node by using sent information, so that another node establishes a communication connection with the communication node as needed. This application further provides a communication method. As shown in FIG. 8, a first node that has a requirement for executing an AI task may select a communication node to send connection request information, so that a second node learns that the first node has the requirement for executing the AI task, and determines, based on a capability of the second node, whether the requirement of the first node for executing the AI task can be satisfied, to determine whether to establish, with the first node, the connection for executing the AI task. The following describes a communication method 800 according to this application with reference to FIG. 8.

FIG. 8 is a schematic flowchart of a communication method 800 according to an embodiment of this application.

S801: A first node sends connection request information to a second node, where the connection request information is used to request to establish, with the second node, a connection for executing an AI task.

Correspondingly, the second node receives the connection request information from the first node. The second node determines that the first node requests to establish, with the second node, the connection for executing the AI task.

For example, when the first node needs to establish, with another node, a connection for executing an AI task, the first node may receive reference signals of a plurality of nodes, measure signal quality of the plurality of nodes, determine a second node whose signal quality satisfies a quality threshold, and send the connection request information to the second node. For example, the second node may be a node with best signal quality in the plurality of nodes. However, this application is not limited thereto.

Optionally, the connection request information is specifically used to request to establish, with the second node, a connection for executing a first AI task. In other words, the connection request information indicates the first AI task.

Optionally, the connection request information further indicates a task type of the first AI task and/or a node type of the first node.

For a specific implementation of the connection request information, refer to the foregoing descriptions. For brevity, details are not described herein again.

S802: The second node sends fourth information to the first node, where the fourth information is used to respond to the connection request information from the first node.

Correspondingly, the first node receives the fourth information from the second node.

Optionally, the connection request information is specifically used to request to establish, with the second node, the connection for executing the first AI task. Alternatively, the connection request information is specifically used to request to establish, with the second node, the connection for executing the first AI task, and the connection request information further indicates the task type of the first AI task and/or the node type of the first node.

In an implementation, the fourth information is connection failure information. In response to the connection request information, the connection failure information indicates that the connection for executing the first AI task fails to be established with the first node. The connection failure information further indicates a third node, and the third node is a node recommended by the second node to the first node for establishing a connection for executing the first AI task.

For example, after receiving the connection request information indicating the first AI task, the second node determines that the first node requests to establish, with the second node, the connection for executing the first AI task. If the second node does not support execution of the first AI task, and the second node determines that the third node supports the execution of the first AI task, the second node may send, to the first node, the fourth information used as the connection failure information, to indicate that the connection for executing the first AI task fails to be established with the first node. The fourth information may indicate the second node to recommend, to the first node, the third node that establishes the connection for executing the first AI task, so that the first node can quickly find a node that can execute the first AI task.

For another example, the connection request information indicates the first AI task, and also indicates the task type of the first AI task and/or the node type of the first node. For example, the first AI task is a task of a first task type, and the second node cannot provide, for the first node, a service of executing the first AI task. Alternatively, the first AI task is a task of a second task type, the second node does not need the first node to assist in completing the first AI task, and the second node may send, to the first node, the fourth information indicating a connection establishment failure, where the fourth information may further indicate the second node to recommend the third node.

In another implementation, the fourth information includes resource configuration information, the resource configuration information indicates a first resource, and the first node sends second information to the second node on the first resource, where the second information includes node description information, and the node description information includes one or more pieces of the following information about the first node: characteristic information of a dataset, model performance requirement information, or capability information, where the dataset is used for model training and/or model inference of the first AI task.

Optionally, the connection request information is specifically used to request to establish, with the second node, the connection for executing the first AI task. Alternatively, the second information indicates to request to establish, with the second node, the connection for executing the first AI task.

Optionally, the second node sends connection determining information or connection failure information to the first node. The connection determining information indicates that the connection for executing the first AI task is successfully established with the first node, and the connection failure information indicates that the connection for executing the first AI task fails to be established with the first node.

Optionally, the connection failure information further indicates a third node, and the third node is a node recommended by the second node to the first node for establishing a connection for executing the first AI task.

According to the foregoing solution, the first node may initiate, based on a requirement, a connection request for establishing, with the second node, a connection for executing an AI task needed by the first node. In response to the connection request of the first node, when a requirement for executing the AI task can be satisfied, the second node establishes, with the first node, the connection for executing the AI task. In this way, a resource, for example, an AI processing capability resource and/or a data resource, can be shared between communication nodes, so that the communication nodes implement more functions by using an AI technology. If the second node cannot satisfy a requirement of the first node for executing the AI task, the second node may recommend, to the first node, the third node that can satisfy the requirement, so that the first node can quickly find a node that can satisfy the requirement for executing the AI task.

The foregoing describes in detail the method according to this application. The following describes a communication apparatus and a communication device according to this application with reference to the accompanying drawings. To implement functions in the method provided in this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

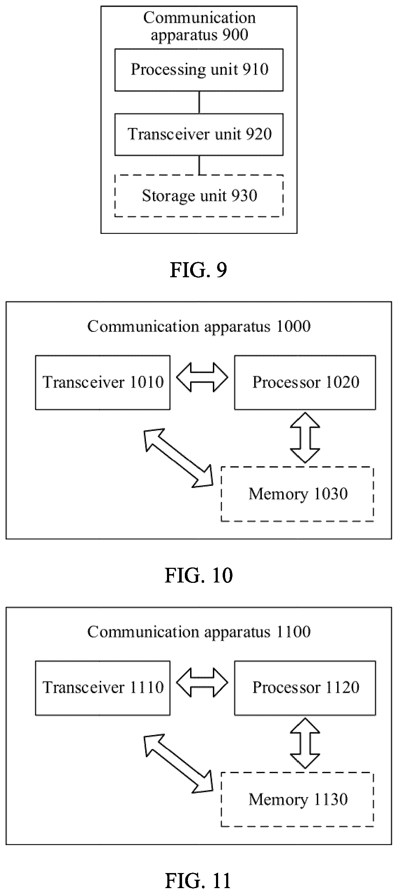

FIG. 9 is a schematic block diagram of a communication apparatus according to this application. As shown in FIG. 9, the communication apparatus 900 may include a transceiver unit 920.

In a possible design, the communication apparatus 900 may correspond to the first node in the foregoing method. When the communication apparatus 900 corresponds to the first node, the communication apparatus 900 may be a communication device, or the communication apparatus 900 is configured (or used) in a chip in the first node, or another apparatus, module, circuit, unit, or the like that can implement the method of the first node.

It should be understood that the communication apparatus 900 may include units configured to perform the method performed by the first node in the foregoing method embodiments. In addition, the units in the communication apparatus 900 and the foregoing other operations and/or functions are intended to implement corresponding procedures in the foregoing method embodiments.

Optionally, the communication apparatus 900 may further include a processing unit 910. The processing unit 910 may be configured to process instructions or data, to implement a corresponding operation.

It should be further understood that when the communication apparatus 900 is the chip configured (or used) in the first node, the transceiver unit 920 in the communication apparatus 900 may be an input/output interface or circuit in the chip, and the processing unit 910 in the communication apparatus 900 may be a processor in the chip.

Optionally, the communication apparatus 900 may further include a storage unit 930. The storage unit 930 may be configured to store the instructions or the data. The processing unit 910 may execute the instructions or the data stored in the storage unit, to enable the communication apparatus to implement a corresponding operation.

It should be understood that the transceiver unit 920 in the communication apparatus 900 may be implemented through a communication interface (for example, a transceiver, a transceiver circuit, an input/output interface, or a pin), for example, may correspond to a transceiver 1010 in a communication apparatus 1000 shown in FIG. 10. The processing unit 910 in the communication apparatus 900 may be implemented by at least one processor, for example, may correspond to a processor 1020 in the communication apparatus 1000 shown in FIG. 10. Alternatively, the processing unit 910 in the communication apparatus 900 may be implemented through at least one logic circuit. The storage unit 930 in the communication apparatus 900 may correspond to a memory 1030 in the first node 1000 shown in FIG. 10.

It should be further understood that a specific process in which the units perform the foregoing corresponding steps is described in detail in the foregoing method. For brevity, details are not described herein again.

In another possible design, the communication apparatus 900 may correspond to the second node in the foregoing method. When the communication apparatus 900 corresponds to the first node, the communication apparatus 900 may be a communication device, or the communication apparatus 900 is configured (or used) in a chip in the first node, or another apparatus, module, circuit, unit, or the like that can implement the method of the first node.

It should be understood that the communication apparatus 900 may include units configured to perform the method performed by the second node in the foregoing method embodiments. In addition, the units in the communication apparatus 900 and the foregoing other operations and/or functions are intended to implement corresponding procedures in the foregoing method embodiments.

Optionally, the communication apparatus 900 may further include a processing unit 910. The processing unit 910 may be configured to process instructions or data, to implement a corresponding operation.

It should be further understood that when the communication apparatus 900 is the chip configured (or used) in the second node, the transceiver unit 920 in the communication apparatus 900 may be an input/output interface or circuit in the chip, and the processing unit 910 in the communication apparatus 900 may be a processor in the chip.

Optionally, the communication apparatus 900 may further include a storage unit 930. The storage unit 930 may be configured to store the instructions or the data. The processing unit 910 may execute the instructions or the data stored in the storage unit, to enable the communication apparatus to implement a corresponding operation.

It should be understood that when the communication apparatus 900 is the second node, the transceiver unit 920 in the communication apparatus 900 may be implemented through a communication interface (for example, a transceiver, a transceiver circuit, an input/output interface, or a pin), for example, may correspond to a transceiver 1110 in a communication apparatus 1100 shown in FIG. 11. The processing unit 1110 in the communication apparatus 1100 may be implemented by at least one processor, for example, may correspond to a processor 1120 in the communication apparatus 1100 shown in FIG. 11. The processing unit 910 in the communication apparatus 900 may be implemented through at least one logic circuit. The storage unit 930 in the communication apparatus 900 may correspond to a memory 1130 in the network device 1100 shown in FIG. 11.

It should be further understood that a specific process in which the units perform the foregoing corresponding steps is described in detail in the foregoing method. For brevity, details are not described herein again.

In another possible design, the communication apparatus 900 may correspond to the terminal, the access network node, or the AI function node in the foregoing method. For a specific implementation, refer to a manner in which the communication apparatus 900 corresponds to the first node or the second node. For brevity, details are not described herein again.

FIG. 10 is a diagram of a structure of a communication apparatus 1000 according to this application. The communication apparatus 1000 may be used in the system shown in FIG. 1, to perform a function of the first node in the foregoing method.

As shown in FIG. 10, the communication apparatus 1000 includes a processor 1020 and a transceiver 1010. Optionally, the communication apparatus 1000 further includes a memory 1030. The processor 1020, the transceiver 1010, and the memory may communicate with each other through an internal connection path, to transfer a control signal and/or a data signal. The memory 1030 is configured to store a computer program, and the processor 1020 is configured to execute the computer program in the memory 1030, to control the transceiver 1010 to receive and send a signal.

The processor 1020 may be configured to perform an action that is internally implemented by the first node and that is described in the foregoing method, and the transceiver 1010 may be configured to perform a sending or receiving action of the first node described in the foregoing method. For details, refer to the descriptions in the foregoing method. Details are not described herein again.

Optionally, the communication apparatus 1000 may further include a power supply, configured to supply power to various components or circuits in the communication apparatus.

FIG. 11 is a diagram of a structure of a communication apparatus 1100 according to this application. The communication apparatus 1100 may be used in the system shown in FIG. 1, to perform a function of the second node in the foregoing method.

As shown in FIG. 11, the communication apparatus 1100 includes a processor 1120 and a transceiver 1110. Optionally, the communication apparatus 1100 further includes a memory 1130. The processor 1120, the transceiver 1110, and the memory may communicate with each other through an internal connection path, to transfer a control signal and/or a data signal. The memory 1130 is configured to store a computer program, and the processor 1120 is configured to execute the computer program in the memory 1130, to control the transceiver 1110 to receive and send a signal.

The processor 1120 may be configured to perform an action that is internally implemented by the second node and that is described in the foregoing method, and the transceiver 1110 may be configured to perform a sending or receiving action of the second node described in the foregoing method. For details, refer to the descriptions in the foregoing method. Details are not described herein again.

Optionally, the communication apparatus 1100 may further include a power supply, configured to supply power to various components or circuits in the communication apparatus.

In an implementation, the communication apparatus 1000 may correspond to a terminal device, and the communication apparatus 1100 may correspond to a network device (for example, an access network device or a device with an AI function, but this application is not limited thereto).

In another implementation, the communication apparatus 1000 and the communication apparatus 1100 may respectively correspond to different terminal devices or different network devices. However, this is not limited in this application.

In the foregoing two implementations, that a communication apparatus corresponds to a communication device (for example, the network device or the terminal device) may be understood as that the communication apparatus is the communication device, is a chip configured (or used) in the communication device, or is another apparatus, module, circuit, unit, or the like configured in the communication device.

In the communication apparatuses shown in FIG. 10 and FIG. 11, the processor and the memory may be integrated into one processing apparatus, and the processor is configured to execute program code stored in the memory, to implement the foregoing functions. During specific implementation, the memory may alternatively be integrated into the processor, or may be independent of the processor. The processor may correspond to the processing unit in FIG. 9. The transceiver 1010 may correspond to the transceiver unit in FIG. 9. The transceiver 1010 may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in this application. The general-purpose processor may be a microprocessor, any conventional processor, or the like. The steps of the method in this application may be directly performed by a hardware processor, or may be performed by using a combination of hardware in the processor and a software module.

In this application, the memory may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform any one of the foregoing methods.

It should be understood that the processing apparatus may be one or more chips. For example, the processing apparatus may be a field programmable gate array (field programmable gate array, FPGA), an application-specific integrated circuit (application-specific integrated circuit, ASIC), a system on a chip (system on a chip, SoC), a central processing unit (central processor unit, CPU), a network processor (network processor, NP), a digital signal processing circuit (digital signal processor, DSP), a microcontroller unit (microcontroller unit, MCU), a programmable controller (programmable logic device, PLD), or another integrated chip.

According to the method provided in this application, this application further provides a computer program product. The computer program product includes computer program code. When the computer program code is executed by one or more processors, an apparatus including the processor is enabled to perform the method in the foregoing method embodiment.

All or some of the technical solutions provided in this application may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer instructions may be stored in a computer-readable storage medium, or transmitted from a computer-readable storage medium to another computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the method provided in this application, this application further provides a computer-readable storage medium. The computer-readable storage medium stores program code. When the program code is run by one or more processors, an apparatus including the processor is enabled to perform the method in the foregoing method embodiment.

According to the method provided in this application, this application further provides a system. The system includes the foregoing one or more first nodes. The system may further include the foregoing one or more second nodes.

In several embodiments provided in this application, it should be understood that the disclosed system, apparatus, and method may be implemented in another manner. For example, the described apparatuses are merely examples. For example, the division into units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one location, or may be distributed on a plurality of network units. Some or all of the units may be selected based on an actual requirement to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first node, first information from a second node, wherein the first information indicates at least one artificial intelligence AI task of the second node; and
sending, by the first node, second information to the second node, wherein the second information is used to establish, with the second node, a connection for executing a first AI task, and the at least one AI task comprises the first AI task.

2. The method according to claim 1, wherein the at least one AI task comprises at least one of a task of a first task type or a task of a second task type, the task of the first task type is an AI task provided by the second node for the first node, and the task of the second task type is an AI task that the second node needs the first node to assist in completing.

3. The method according to claim 1 or 2, wherein the first information further indicates at least one node type corresponding to the at least one AI task, and the at least one node type comprises at least one of a first node type or a second node type, wherein
the second node needs a node of the first node type to assist in completing an AI task corresponding to the first node type, and the second node supports providing, for a node of the second node type, a service of executing an AI task corresponding to the second node type.

4. The method according to any one of claims 1 to 3, wherein before the sending, by the first node, second information to the second node, the method further comprises:
sending, by the first node, connection request information to the second node, wherein the connection request information is used to request to establish, with the second node, a connection for executing an AI task; and
receiving, by the first node, fourth information from the second node, wherein the fourth information is used to respond to the connection request information.

5. The method according to claim 4, wherein the fourth information comprises resource configuration information, the resource configuration information is used to configure a first resource, and the sending, by the first node, second information to the second node comprises:
sending, by the first node, the second information to the second node on the first resource, wherein the second information comprises node description information, and the node description information comprises one or more pieces of the following information about the first node:
characteristic information of a dataset, model performance requirement information, or capability information, wherein
the dataset is used for at least one of model training or model inference of the first AI task.

6. The method according to any one of claims 1 to 3, wherein the method further comprises:
receiving, by the first node, fourth information from the second node, wherein the fourth information is used to respond to a connection establishment request of the first node.

7. The method according to claim 6, wherein the fourth information comprises resource configuration information, the resource configuration information indicates a first resource, and the method further comprises:
sending, by the first node, node description information to the second node on the first resource, wherein the node description information comprises one or more pieces of the following information about the first node: characteristic information of a dataset, model performance requirement information, or capability information, wherein the dataset is used for at least one of model training or model inference of the first AI task.

8. The method according to claim 6 or 7, wherein the fourth information further comprises at least one piece of the following information: information about the dataset corresponding to the first AI task, performance information of an intelligent model of the first AI task, or load information of the second node, wherein
the information about the dataset indicates at least one of a characteristic of training data of the intelligent model or that the dataset is used to evaluate performance of the intelligent model of the first AI task.

9. The method according to any one of claims 1 to 8, wherein the method further comprises:
receiving, by the first node, connection determining information or connection failure information from the second node, wherein
the connection determining information is used to determine to establish, with the first node, the connection for executing the first AI task, and the connection failure information indicates that the connection for executing the first AI task fails to be established with the first node.

10. The method according to claim 9, wherein the connection failure information further indicates a third node, and the third node is a node recommended by the second node to the first node for establishing a connection for executing the first AI task.

11. The method according to any one of claims 1 to 10, wherein the first information comprises identification information of each of the at least one AI task, or identification information and task type information of each AI task.

12. A communication method, comprising:
sending, by a second node, first information, wherein the first information indicates at least one artificial intelligence AI task of the second node; and
receiving, by the second node, second information from a first node, wherein the second information is used to establish, with the second node, a connection for executing a first AI task, and the at least one AI task comprises the first AI task.

13. The method according to claim 12, wherein the at least one AI task comprises at least one of a task of a first task type or a task of a second task type, the task of the first task type is an AI task provided by the second node for the first node, and the task of the second task type is an AI task that the second node needs the first node to assist in completing.

14. The method according to claim 12 or 13, wherein the first information further indicates at least one node type corresponding to the at least one AI task, and the at least one node type comprises at least one of a first node type or a second node type, wherein
the second node needs a node of the first node type to assist in completing an AI task corresponding to the first node type, and the second node supports providing, for a node of the second node type, a service of executing an AI task corresponding to the second node type.

15. The method according to any one of claims 12 to 14, wherein before the receiving, by the second node, second information from a first node, the method further comprises:
receiving, by the second node, connection request information from the first node, wherein the connection request information is used to request to establish, with the second node, a connection for executing an AI task; and
sending, by the second node, fourth information to the first node, wherein the fourth information is used to respond to the connection request information.

16. The method according to claim 15, wherein the fourth information comprises resource configuration information, the resource configuration information is used to configure a first resource, and the sending, by the first node, the second information to the second node comprises:
sending, by the first node, the second information to the second node on the first resource, wherein the second information comprises node description information, and the node description information comprises one or more pieces of the following information about the first node:
characteristic information of a dataset, model performance requirement information, or capability information, wherein
the dataset is used for at least one of model training or model inference of the first AI task.

17. The method according to any one of claims 12 to 14, wherein the method further comprises:
receiving, by the first node, fourth information from the second node, wherein the fourth information is used to respond to a connection establishment request of the first node.

18. The method according to claim 17, wherein the fourth information comprises resource configuration information, the resource configuration information indicates a first resource, and the method further comprises:
receiving, by the second node, node description information from the second node on the first resource, wherein the node description information comprises one or more pieces of the following information about the first node: characteristic information of a dataset, model performance requirement information, or capability information, wherein the dataset is used for at least one of model training or model inference of the first AI task.

19. The method according to claim 17 or 18, wherein the fourth information further comprises at least one piece of the following information: information about the dataset corresponding to the first AI task, performance information of an intelligent model of the first AI task, or load information of the second node, wherein
the information about the dataset indicates a characteristic of training data of the intelligent model and/or that the dataset is used to evaluate performance of the intelligent model of the first AI task.

20. The method according to any one of claims 12 to 19, wherein the method further comprises:
sending, by the second node, connection determining information or connection failure information to the first node, wherein
the connection determining information is used to determine to establish, with the first node, the connection for executing the first AI task, and the connection failure information indicates that the connection for executing the first AI task fails to be established with the first node.

21. The method according to claim 20, wherein the connection failure information further indicates a third node, and the third node is a node recommended by the second node to the first node for establishing a connection for executing the first AI task.

22. The method according to any one of claims 12 to 21, wherein the first information comprises identification information of each of the at least one AI task, or identification information and task type information of each AI task.

23. A communication method, comprising:
sending, by a first node, connection request information to a second node, wherein the connection request information is used to request to establish, with the second node, a connection for executing an artificial intelligence AI task; and
receiving, by the first node, fourth information from the second node, wherein the fourth information is used to respond to the connection request information.

24. The method according to claim 23, wherein the fourth information comprises resource configuration information, the resource configuration information indicates a first resource, and the method further comprises:
sending, by the first node, second information to the second node on the first resource, wherein the second information comprises node description information, and the node description information comprises one or more pieces of the following information about the first node: characteristic information of a dataset, model performance requirement information, or capability information, wherein the dataset is used for model training and/or model inference of a first AI task.

25. The method according to claim 24, wherein the connection request information is specifically used to request to establish, with the second node, a connection for executing the first AI task, or the second information indicates to request to establish, with the second node, a connection for executing the first AI task.

26. The method according to any one of claims 23 to 25, wherein the connection request information is specifically used to request to establish, with the second node, the connection for executing the first AI task, the fourth information indicates a third node, and the third node is a node recommended by the second node to the first node for establishing a connection for executing the first AI task.

27. The method according to any one of claims 24 to 26, wherein the method further comprises:
receiving, by the first node, connection determining information or connection failure information from the second node, wherein the connection determining information is used to determine to establish, with the first node, the connection for executing the first AI task, and the connection failure information indicates that the connection for executing the first AI task fails to be established with the first node.

28. The method according to claim 27, wherein the connection failure information further indicates the third node, and the third node is the node recommended by the second node to the first node for establishing the connection for executing the first AI task.

29. A communication method, comprising:
receiving, by a second node, connection request information from a first node, wherein the connection request information is used to request to establish, with the second node, a connection for executing an AI task; and
sending, by the second node, fourth information to the first node, wherein the fourth information is used to respond to the connection request information.

30. The method according to claim 29, wherein the fourth information comprises resource configuration information, the resource configuration information indicates a first resource, and the method further comprises:
receiving, by the second node, second information from the first node on the first resource, wherein the second information comprises node description information, and the node description information comprises one or more pieces of the following information about the first node: characteristic information of a dataset, model performance requirement information, or capability information, wherein the dataset is used for model training and/or model inference of a first AI task.

31. The method according to claim 30, wherein the connection request information is specifically used to request to establish, with the second node, a connection for executing the first AI task, or the second information indicates to request to establish, with the second node, a connection for executing the first AI task.

32. The method according to any one of claims 29 to 31, wherein the connection request information is specifically used to request to establish, with the second node, the connection for executing the first AI task, the fourth information indicates a third node, and the third node is a node recommended by the second node to the first node for establishing a connection for executing the first AI task.

33. The method according to any one of claims 30 to 32, wherein the method further comprises:
sending, by the second node, connection determining information or connection failure information to the first node, wherein the connection determining information is used to determine to establish, with the first node, the connection for executing the first AI task, and the connection failure information indicates that the connection for executing the first AI task fails to be established with the first node.

34. The method according to claim 33, wherein the connection failure information further indicates the third node, and the third node is the node recommended by the second node to the first node for establishing the connection for executing the first AI task.

35. A communication apparatus, comprising:
a module configured to perform the method according to any one of claims 1 to 11, and/or a module configured to perform the method according to any one of claims 23 to 28; or
a module configured to perform the method according to any one of claims 12 to 22, and/or a module configured to perform the method according to any one of claims 29 to 34.

36. A communication apparatus, comprising a processor, wherein the processor is connected to a memory, the memory is configured to store a computer program, and the processor is configured to execute the computer program stored in the memory, so that the communication apparatus performs the method according to any one of claims 1 to 11, and/or performs the method according to any one of claims 23 to 28; or performs the method according to any one of claims 12 to 22, and/or performs the method according to any one of claims 29 to 34.

37. The apparatus according to claim 36, wherein the communication apparatus further comprises a transceiver, wherein the transceiver is configured to: receive a signal from a communication apparatus other than the communication apparatus, and transmit the signal to the processor, or send a signal from the processor to a communication apparatus other than the communication apparatus, so that the communication apparatus performs the method according to any one of claims 1 to 11, and/or performs the method according to any one of claims 23 to 28; or the communication apparatus performs the method according to any one of claims 12 to 22, and/or performs the method according to any one of claims 29 to 34.

38. A computer-readable storage medium, wherein the computer-readable storage medium stores a computer program; and when the computer program is run, the method according to any one of claims 1 to 11 is performed, and/or the method according to any one of claims 23 to 28 is performed; or the method according to any one of claims 12 to 22 is performed, and/or the method according to any one of claims 29 to 34 is performed.

39. A computer program product, wherein the computer program product comprises computer-executable instructions; and when the computer-executable instructions are run, the method according to any one of claims 1 to 11 is performed, and/or the method according to any one of claims 23 to 28 is performed; or the method according to any one of claims 12 to 22 is performed, and/or the method according to any one of claims 29 to 34 is performed.

40. A communication system, comprising:
a communication apparatus configured to perform the method according to any one of claims 1 to 11 and a communication apparatus configured to perform the method according to any one of claims 12 to 22; and/or
a communication apparatus configured to perform the method according to any one of claims 23 to 28 and a communication apparatus configured to perform the method according to any one of claims 29 to 34.
